# EUROPEAN PATENT SPECIFICATION

(11) **EP 1 121 640 B1**
(45) Date of publication and mention of the grant of the patent: **27.07.2016**
(21) Application number: 99970749.0
(22) Date of filing: 15.10.1999
(51) Int. Cl.: G06F 9/44

(54) **APPARATUS AND METHOD FOR BUILDING MODELING TOOLS**
GERÄT UND VERFAHREN ZUM BAUEN VON MODELLWERKZEUGEN
APPAREIL ET PROCEDE DE CONSTRUCTION D'OUTILS DE MODELISATION

(30) Priority: 16.10.1998 US 104682 P
(43) Date of publication of application: 08.08.2001
(73) Proprietor: CA, Inc., Islandia, NY 11749 (US)
(72) Inventor: DEFFLER, Tad, A., Boonton, NJ 07005 (US); Russo, Mark, Belle Mead, New Jersey 08502, USA (US)
(74) Representative: Dunlop, Hugh Christopher
(86) International application number: PCT/US1999/024118
(87) International publication number: WO 2000/023883

(56) References cited:
- US-A- 5 717 924
- US-A- 5 768 586
- YING YANG: "CHANGE MANAGEMENT IN OBJECT-ORIENTED DATABASES" PROCEEDINGS OF THE INTERNATIONAL PHOENIX CONFERENCE ON COMPUTERS AND COMMUNICATIONS. TEMPE, MAR. 23 - 26, 1993, NEW YORK, IEEE, US, vol. CONF. 12, 23 March 1993 (1993-03-23), pages 238-244, XP000370484 ISBN: 0-7803-0922-7
- KANTOROWITZ E: "ALGORITHM SIMPLIFICATION THROUGH OBJECT ORIENTATION" SOFTWARE PRACTICE & EXPERIENCE, JOHN WILEY & SONS LTD. CHICHESTER, GB, vol. 27, no. 2, 1 February 1997 (1997-02-01), pages 173-183, XP000655624 ISSN: 0038-0644
- DOUGLASS B P: "DESIGNING REAL-TIME SYSTEMS WITH THE UNIFIED MODELING LANGUAGE" ELECTRONIC DESIGN, PENTON PUBLISHING, CLEVELAND, OH, US, vol. 45, no. 20, 15 September 1997 (1997-09-15), page 132,134,136,13 XP000752106 ISSN: 0013-4872
- 'Logic works releases beta of object-relational modeling tool for universal server database' INFORMIX WORLD USER CONFERENCE, [Online] 22 July 1997, SAN FRANCISCO CA, pages 1 - 3, XP002927153 Retrieved from the Internet: <URL:http://www.microway.com.au/press/logoc -umabeta.htm> [retrieved on 2000-01-11]

## Description

### CROSS-REFERENCE TO RELATED APPLICATIONS

The present application claims benefit of the filing date of U.S. Provisional Application No. 60/104,682 entitled MODELING TOOL SYSTEMS AND METHODS, filed on October 16, 1998.

The present application is related to U.S. Patent Application No. 09/419,731 entitled METHOD FOR IMPACT ANALYSIS OF A MODEL, being concurrently filed on the same day.

The present application is related to International Patent Application No. PCT/US99/24120 entitled METHOD FOR DETERMINING DIFFERENCES BETWEEN TWO OR MORE MODELS, being concurrently filed on the same day.

The present application is related to International Patent Application No. PCT/US99/24115 entitled METHOD AND SYSTEM FOR AN EXTENSIBLE MACRO LANGUAGE, being concurrently filed on the same day.

The present application is related to International Patent Application No. PCT/US99/23876 entitled METHOD AND APPARATUS FOR PROVIDING ACCESS TO A HIERARCHICAL DATA STORE THROUGH AN SQL INPUT, being concurrently filed on the same day.

### Reference To Paper Appendix

The present application includes a paper appendix attached hereto setting forth exemplary services and functions for an exemplary embodiment of the present invention which is hereby incorporated by reference. A portion of the disclosure of the-present application includes material which is subject to copyright protection. The copyright owner has no objection to the facsimile reproduction by anyone of the patent disclosure, as it appears in the Patent & Trademark Office patent files or records, but otherwise reserves all copyright rights whatsoever.

### Field Of The Invention

The present invention relates to a modeling engine, in particular to an apparatus and method for building modeling tools.

### Background Information

Modeling tools have existed for many years. The general method of implementing such modeling tools is to write a specific modeling tool that implements a specific modeling methodology. Although this method has generally been accepted, such a method has several disadvantages. For example, conventional modeling tools require a new implementation for the creation of each new modeling tool, even though many functions within a given tool are similar, if not the same, as prior tools.

A need exists for a method and apparatus for building modeling tools using a uniform framework constructed to support the generation of multiple, disparate modeling methodologies. This new apparatus and method for building modeling tools will reduce the effort and time required to implement a new modeling tool.

Ying Yang, "Change Management in Object-Oriented Databases" (Proceedings of the Twelfth Annual International Phoenix Conference on Computers and communications, pages 238-244, IEEE, March 23-26 1993) describes a database model in which every object in a database is represented as a communicating agent. An object can detect changes in its environment and propagate the effects of the changes to other affected objects in the database.

### Summary of the Invention

In accordance with the invention, there is provided: a modelling tool apparatus in accordance with claim 1; a method in accordance with claim 9; and a computer-readable medium in accordance with claim 13.

Disclosed herein is a method and apparatus that includes semantics and a model having objects and properties.

Semantics are applied against transactions that change objects and properties that may be included in the model. Any changes to the objects and properties by a transaction that violates the respective semantics are undone. Further, the semantics may be extended by a developer.

Also disclosed herein is an apparatus for building a modeling tool. The apparatus includes, for example, a meta model that has a semantic registry and a meta data manager, an object/property interface, and an object/property factory registry. The object/property factory registry is coupled to the meta model and the object/property interface. The apparatus also includes an object/property model coupled to the object/property interface.

Also disclosed herein is a method for building a modeling tool. The method includes constructing an object/property model by defining a first set of classes and constructing a meta model by defining a second set of classes. The method also includes associating a type code with the first and second set of classes and providing a predefined set of semantics to the meta model. The method further includes identifying a plurality of discrete events with at least one semantic of the set of semantics being invoked at each occurrence of the plurality of discrete events. The method also includes providing an object/property interface for limiting access to the object/property model from a developer.

### Brief Description Of The Drawings

FIG. 1 illustrates a functional block diagram of a conventional computer system.
FIG. 2 illustrates a functional block diagram of an exemplary embodiment of the present invention.
FIG. 3 illustrates a data model of an exemplary embodiment of a meta model of the present invention.
FIG. 4 illustrates a flow diagram of an exemplary embodiment of a method of firing-an object semantic of the present invention.
FIG. 5 illustrates a flow diagram of an exemplary embodiment of a method of firing a property semantic of the present invention.
FIG. 6 illustrates a flow diagram of an exemplary embodiment of a method for building a modeling tool of the present invention.
FIG. 7 illustrates a flow diagram of an exemplary embodiment of executing an exemplary function of the present invention.

### Detailed Description

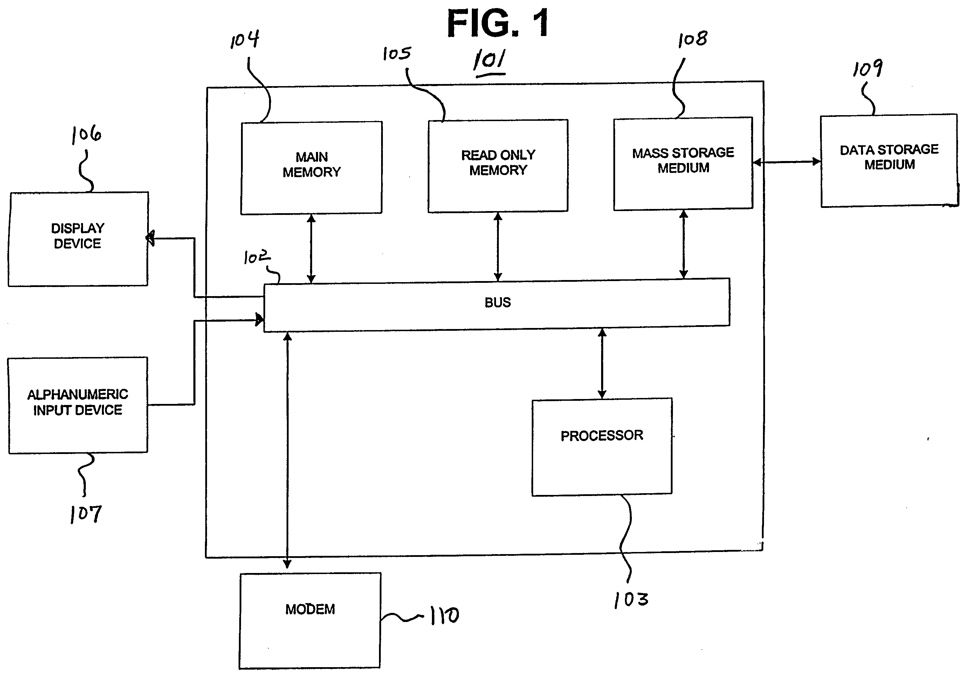

FIG. 1 illustrates a conventional computer system 101 in which the present invention operates. In an exemplary embodiment, the present invention is implemented, for example, on a SUN™ Workstation manufactured by SUN MICROSYSTEMS™. Alternate embodiments may be implemented, for example, on an IBM™ Personal Computer manufactured by IBM Corporation or a MACINTOSH™ computer manufactured by APPLE™ Computer. It will be apparent to those of ordinary skill in the art that other computer system architectures may also be employed. In general, such computer systems as illustrated by FIG. 1 include a bus 102 for communicating information, a processor 103 such as a central processing unit coupled to the bus 102 for processing information, and a main memory 104 coupled to the bus 102 for storing information and instructions for the processor 103. A read-only memory 105 is coupled to the bus 102 for storing static information and instructions for the processor 103. A display device 106 coupled to the bus 102 displays information, for example, for a developer.

An alphanumeric input device 107, such as a key board, is coupled to the bus 102 and communicates information and command selections to the processor 103. A modem 110 is coupled to the bus 102 and provides communication with, for example, other computer systems or databases and a mass storage medium 108, such as a magnetic disk and associated disk drive coupled to the bus 102 for storing information and instructions. A data storage medium 109 containing digital information is configured, for example, to operate with a mass storage medium 108 to allow processor 103 access to the digital information on data storage medium 109 via bus 102. In addition, a CD-ROM drive (not shown) may also be used for the storage of high resolution images for display on the display device 106.

An embodiment of the present invention is implemented, for example, as a software module written in the C⁺⁺ programming language which may be executed on a computer system such as computer system 101 in a conventional manner. Using well known techniques, the application software may be stored on data storage medium 109 and subsequently loaded into and executed within the computer system 101. Once initiated, the software of the preferred embodiment operates, for example, in the manner described below. Universal Modeling Architecture (UMA) is a data-driven modeling engine that could work in various problem domains based on an external definition of a meta model that may be provided by a developer and be extended to provide an UMA-based product. An external definition of a meta model is, for example, a series of descriptions of the types of objects that are to be found in the problem domain, and the properties associated with each of these objects. These descriptions may be provided by invoking a set of functions exposed by the implementation, and passing in, via function parameters, the descriptive information. Exemplary problem domains may include: data modeling such as database tables, columns and indices; process modeling such as activities and arrows; access modeling such as data manipulation language statements and files; and component modeling such as interfaces, implementations, and dependencies.

In an exemplary embodiment of the present invention, the UMA-based product is a modeling tool. The UMA-based product may be an UMA-based application such as a user interface that includes UMA. The UMA-based product may also include an instance of an object/property model based on an external definition of the meta model provided by, for example, a developer.

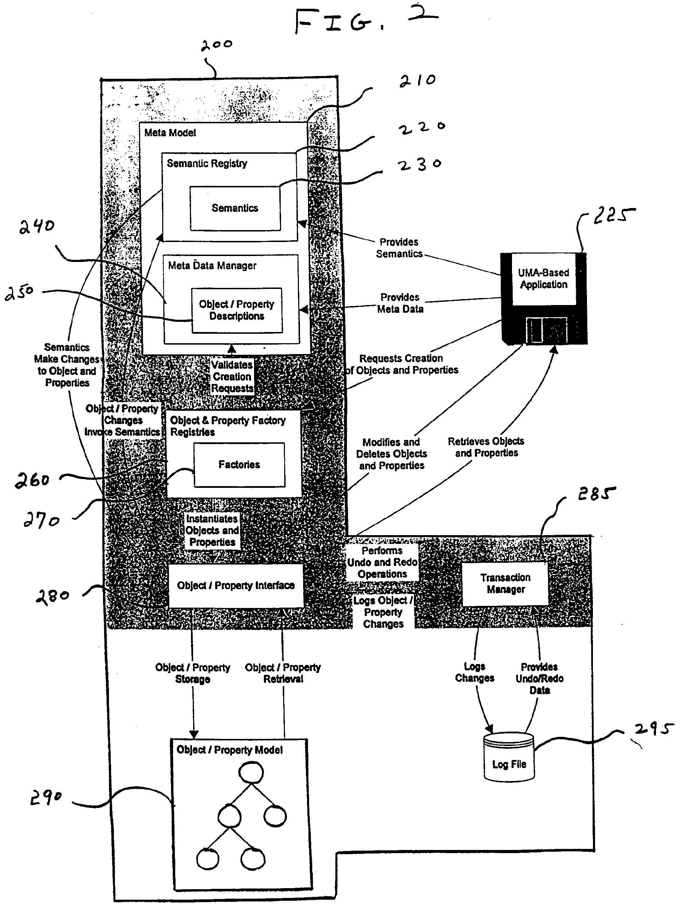

In an exemplary embodiment of the present invention, as shown in FIG. 2, UMA 200 includes a meta model 210, object and property factory registries 260, object/property interface 280, transaction manager 285, log file 295, and object/property model 290. The meta model 210 may include a semantic registry 220 including a plurality of sets of semantics 230 and a meta data manager 240 including object/property descriptions 250. The object/property descriptions 250 are sets of information describing the characteristics of an object or a property. In the case of objects, this may include its name, a human-readable piece of descriptive text, generalization information, information about what other types of objects may be contained within it. Generalization information, for example, describes refinement/subtyping such as synonyms information.

Object/property descriptions may be provided by the developer or user as the externally defined meta model. The meta model 210 is a description of the objects and properties of the problem domain to be solved and a plurality of sets of semantics 230 to be respectively invoked to change objects and properties when changes to such objects and properties are requested.

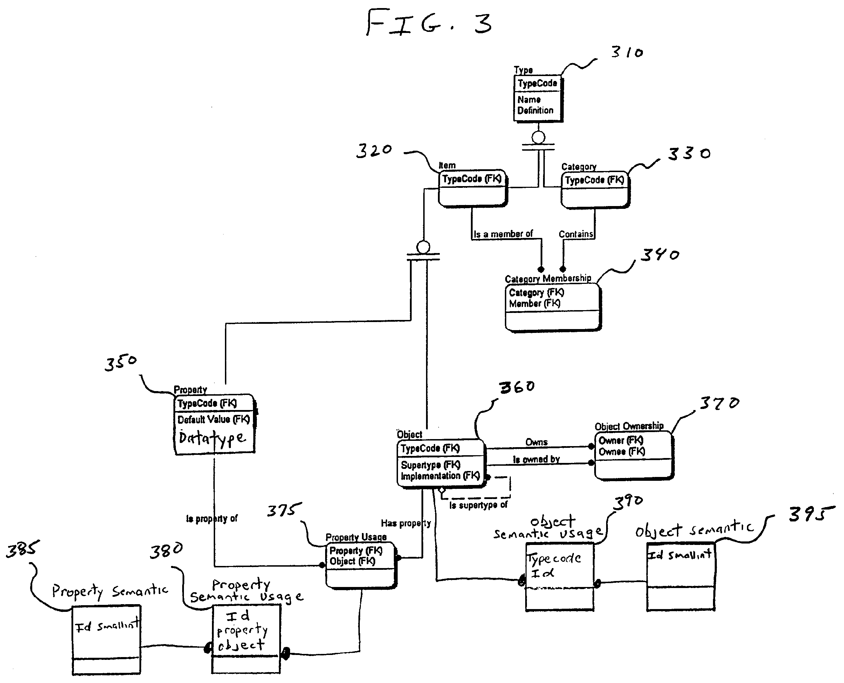

FIG. 3 shows an exemplary embodiment of meta model 210 of the present invention. As shown in FIG. 3, the meta model 210 includes a plurality of classes such as objects, properties and semantics and establishes relationships between objects, properties and semantics. Type 310 is associated with a type code key, name attribute and definition attribute. Type 310 can be, for example, a category 330 or an item 320. Category 330 is associated with a type code key and includes a plurality of items. Category membership 340 is associated with a category key and member key. Item 320 is associated with a type code key and can be a property or object.

Property 350 is associated with a type code key, default value attribute and datatype attribute. Property 350 is also associated with property usage 375. Object 360 is associated with a type code key, object implementation attribute, and supertype attribute. A supertype attribute provides further specificity to the object 360. Object 360 may own (e.g., include as a component) and be owned by other objects. Object ownership 370 is associated with owner key and ownees key. Property usage 375 is associated with property key and object key.

Property usage 375 also associates the property 350 with the object 360. Object semantic usage 390 is associated with a type code key and identification (ID) key. Object semantic usage 390 associates object 360 with object semantic 395. The object semantic 395 is associated with an ID key. Property semantic usage 380 is associated with an ID key, property key and object key. Property semantic usage 390 associates property semantic 385 with property usage 375. Property semantic 385 is associated with an ID key.

As shown in FIG. 2, the meta data manager 240 of the meta model 210 receives meta data (e.g., description of objects and properties), for example, from a developer through an UMA-based application 225. The meta data is what are the objects and properties provided by a developer to solve the problem domain of the developer. The meta data manager 240 receives validation creation requests from object and property factory registries 260.

As shown in FIG. 2, the semantic registry 220 of the meta model 210 includes a plurality of sets of semantics 230 which may include, for example, a predefined set and additional sets provided by the developer through an UMA-based application. Semantics 230 are modeling rules encapsulated in semantic objects that expose an interface, such as a pure virtual class, that hide the modeling engine from details of the semantics 230. The predefined semantic set provides rules to enforce the integrity of the underlying modeling engine and in an exemplary embodiment of the present invention, the predefined semantic set cannot be changed by a developer. The additional sets of semantics provided by the developer can be modified by the developer. An example of a semantic may be, for example, one that enforces the rule "No two columns in a single database table may have the same name."

Semantics 230 gain access to object/property model 290 through object/property interface 280. The semantic registry 220 may include an object semantic registry for determining if a specific set of object semantics exist and, if so, locating respective sets of object semantics. The semantic registry 220 may also include a property semantic registry for determining if a specific set of property semantics exist and, if so, locating the respective set of property semantics. The semantic registry 220 locates the respective set of semantics requested, for example, by object/property interface 280. The semantic registry 220 makes changes to the respective objects and properties in accordance with the semantics invoked and provides the changed objects and properties to object/property interface 280. The semantic registry 220 also provides the status of an action of a transaction to the object/property interface 280. For example, one of the semantics invoked for an action may be violated and, thus, indicate that the action has failed.

Object and property factory registries 260 may include factories 270 such as object factories and property factories, respectively. The object and property factory registries 260 receive requests for the creation of objects and properties, for example, from a developer through an UMA-based application 225. The factories 270 create objects and properties. The object and property factory registries 260 determine if a specific factory exists and, if so, locate the respective factory to create the respective object or property being requested. The object and property factory registries 260 also provide a validation creation request to the meta data manager 240. The validation may include, for example, whether the creation of the object or property requested was successful. The object and property factory registries 260 instantiate objects and properties, respectively, and provide such objects and properties to object/property interface 280.

As shown in FIG. 2, object/property interface 280 receives requests for the modification and deletion of objects and properties, for example, by a developer through UMA-based application 225. Such requests invoke the respective semantics in meta model 210 which may result in changes to the objects and properties which are provided to object/property interface 280 from semantic registry 220 of meta model 210. The object/property interface 280 may identify a discrete event from a plurality of discrete events, for example, as shown in Table One, and determine that a semantic or set of semantics should be invoked. The discrete events indicate occurrences where object/property model 290 may be modified. In an exemplary embodiment of the present invention, authors of UMA may provide a plurality of discrete events.

**TABLE ONE**

| **Constant** | **Description** |
|---|---|
| PostCreation | An object is being created |
| PreDestruction | An object is being destroyed |
| PreEdit | A property is about to be created and/or modified |
| PostEdit | A property has just been created and/or modified |
| PreNull | A property is about to be destroyed |
| PreOwnerDestruction | The object owning a property is about to be destroyed |

The object/property interface 280 is provided with the status of an action of a transaction by semantic registry 220 based on the result of the respective set of semantics invoked. For example, if an action caused any one of the set of semantics invoked to be violated, semantic registry 220 may provide an indication that the action failed. If the action did not cause any one of the set of semantics to be violated, however, semantic registry 220 may provide an indication that the action was successful. The object/property interface 280 provides object and property changes to the transaction manager 285 and, if the object/property interface 280 determines that an action failed, it may provide an indication that the action failed to transaction manager 285. The object/property interface 280 also provides objects and properties to object/property model 290. The object/property 280 interface also retrieves objects and properties from object/property model 290, for example, to provide such objects and properties to an UMA-based application 225 if requested.

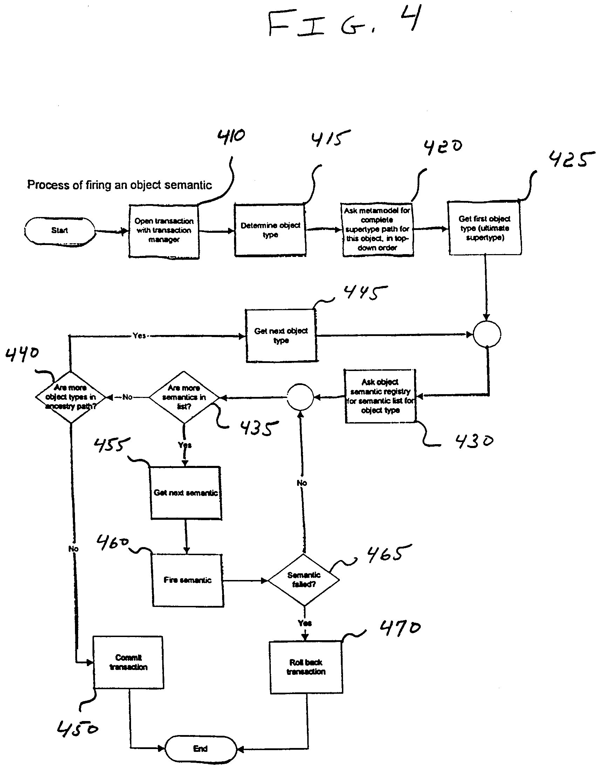

FIG. 4, illustrates a flow diagram of an exemplary method of object/property interface 280 firing an object semantic. In 410, the object/property interface 280 opens transaction with transaction manager 285. A transaction is opened for each change to the model so that the change can be cancelled if found to be invalid. In 415, object/property interface 280 communicates with the object itself. All objects know their type to determine the object type. In 420, object/property interface 280 obtains the complete supertype path for a respective object from meta model 210, for example, in top-down order. In 425, the first object type (ultimate supertype) is obtained by object/property interface 280 from the metamodel.

In 430, object/property interface 280 obtains the semantic list for the object type from object semantic registry 220. In 435, object/property interface 280 communicates with semantic registry 220 to determine whether more semantics are in the list. If yes, object/property interface 280 obtains, in 455, and fires, in 460, the next semantic. The object/property interface 280 determines, in 465, if the semantic failed. If so, in 470, the transaction is rolled back by the transaction manager 285 pursuant to a request from object/property interface 280. If, however, the semantic did not fail, in 435, object/property interface 280 will again determine whether any more semantics are in the list.

If no more semantics are in the list, in 440, object/property interface 280 will communicate with the metamodel and determine whether any more object types are in the ancestry path. If no; in 450, the transaction is committed. If there are more object types in the ancestry path, in 445, the next object type is obtained and object/property interface 280 again proceeds in 430 with obtaining the semantic list for object type from object semantic registry.

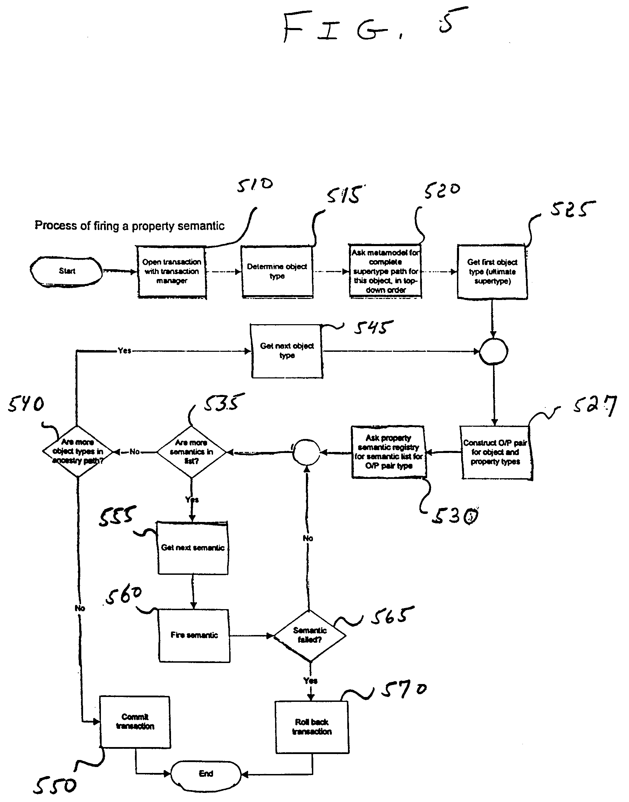

FIG. 5 illustrates a flow diagram of an exemplary method of object/property interface 280 firing a property semantic. In 510, object/property interface 280 opens the transaction with transaction manager 285. In 515, object/property interface 280 communicates with the object to determine the object type. In 520, object/property interface 280 obtains the complete supertype path for the respective object from meta model 210, for example, in top-down order. In 525, the first object type (ultimate supertype) is obtained by object/property interface 280 from the metamodel. In 527, object/property interface 280 constructs an object/property pair for object and property types. In 530, object/property interface 280 obtains the semantic list for the object/property pair type from property semantic registry 530.

In 535, object/property interface 280 determines whether more semantics are in the list. If yes, in 555, object/property interface 280 obtains the next semantic and in 560 fires the next semantic. In 565, if object/property interface 280 determines that the semantic failed, in 570, the transaction is rolled back. If, however, the semantic did not fail, object/property interface 280 will return to 535 to determine whether any more semantics are in the list.
If no more semantics are in the list, in 540, object/property interface 280 will communicate with the metamodel and determine whether any more object types are in the ancestry path. If no; the transaction is committed in 550. If there are more object types in the ancestry path, in 545, the next object type is obtained and object/property interface 280 again proceeds with constructing an object property pair for object and property types in 527.

In an exemplary embodiment of the present invention, object/property model 290 includes a set of predefined objects and properties. The predefined set of objects and properties may be provided by, for example, the UMA developer to decrease the amount of work necessary for the developer of the product. The object/property model 290 also receives objects and properties from an object/property interface 280. The objects and properties received from the object/property interface are based on the external definition of the meta data provided by the developer. It is the objects and properties requested, for example, by a developer to be created and modified that are included in object/property model 290. Further, the object/property model 290 logs model changes to the transaction manager 285 through an object/property interface 280. In an exemplary embodiment of the present invention, however, objects and properties in object/property model 290 that are a result of a failed action are removed from object/property model 290.

Accordingly, in an exemplary embodiment of the present invention, objects and properties provided by a developer that remain in the object/property model 290 are the objects and properties that result from a successful action. Thus, a developer does not have direct access to and cannot directly change the object/property model 290. Consequently, changes to the model are known by the modeling engine and consistent and valid states can be assured at all times. If the developer had direct access to the underlying data structures, inappropriate changes may be made thereby creating invalid states in the model.

The transaction manager 285 places respective objects and properties in the state that they were in prior to being changed by a failed action. For example, the transaction manager 285 is provided with the indication that an action has failed by the object/property interface 280. Any action that fails is undone or wiped out. The transaction manager 285 may accomplish this, for example, by logging changes of object/property model 290 to log file 295, obtaining undo data from the log file 295, and performing an undo operation based on the success or failure of actions within a transaction as determined by object/property interface 280. Accordingly, object/property model 285 is maintained in a valid state. In an exemplary embodiment of the present invention, transaction manager 285 may also receive a request to undo or redo an action from UMA-based application 225. If a redo is being requested, transaction manager 285 may request redo information from log file 295 and perform the redo operation an a known manner.

In an exemplary embodiment of the present invention, UMA 200 may further include an internal services component and an external services interface. The internal services component may include, for example, services or functions exposed to the developer to assist in the creation and manipulation of a model for solving the problem domain of the developer. In an exemplary embodiment of the present invention, internal services may include those services or functions indicated in Appendix 1 attached herein.

The external services interface is an interface which allows external services to communicate with UMA 200. The external services interface may be, for example, an object linking and embedding an add-in application program interface allowing third-party modules to extend the modeling capabilities of the tool, thus extending the modeling environment and the modeling rules to include functionality such as being automatically user-defined. Accordingly, the developer may have access to services beyond the services internal to UMA 200. External services may be, for example, a module for enforcing corporate naming standards upon all names entered by the user. Further, UMA 200 is scalable as the user interface such as UMA-based application 225 is separated from the semantics 230.

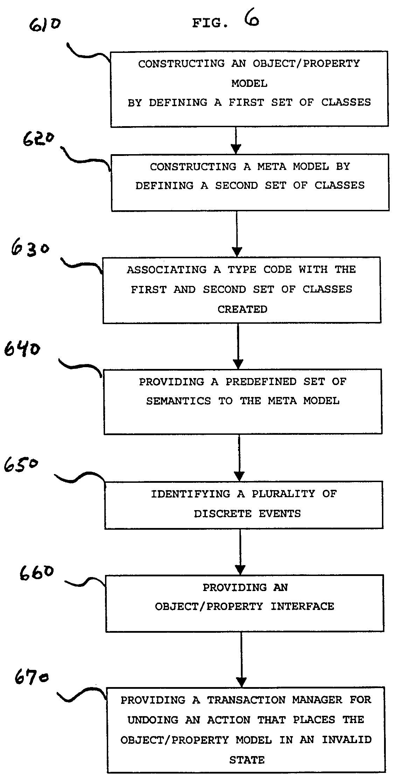

An exemplary embodiment of a method for building modeling tools of the present invention is shown in FIG. 6. In 610, an object/property model 290 is constructed by defining a first set of classes for objects and properties provided by the developer as meta data. In an exemplary embodiment of the present invention, the object/property model 290 may include a predefined set of one or more objects and properties. The objects provide storage mechanisms for the properties that apply to it. In an exemplary embodiment of the present invention, an interface class for an object may be, for example, UMEObjectI. Properties may be implemented as a base class that requires programmer subclassing. In an exemplary embodiment of the present invention, the base class may provide administration services without data storage. In an exemplary embodiment of the present invention, a developer may provide a subclass that declares the data element and a method for creating an accessor.

In 620, a meta model 210 is constructed, for example, by defining a second set of classes. The second set of classes are designed to hold descriptions of properties, objects and semantics. For example, in an exemplary embodiment of the present invention, two semantic interface classes are specified. A first semantic interface class, for example, UMEObjectSemanticI, is the interface for any semantic that affects the creation or destruction of an object. Further, a second semantic interface class, for example, UMEPropertySemanticI, is the interface for any semantic that affects the creation, destruction, or modification of a property. In an exemplary embodiment of the present invention, the implementation of a representation of meta model 210 includes a singleton object that exposes static methods for registering meta data and semantics.

Modeling rules, e.g., semantics 230, may be incorporated into semantic registry 220 of meta model 210 as a predefined set of semantics as in 640 and/or as additional sets of semantics, for example, provided by a developer either upon startup or any time thereafter. In order to incorporate a modeling rule into meta model 210 for an object, the developer subclasses the appropriate calls, for example, UMEObjectSemanticI for a modeling rule for an object and UMEPropertySemanticI for a modeling rule for a property. The developer also could implement a fire method to perform the desired operations and checks upon object/property model 290. A value will be returned to indicate whether the operation was successful. For example, a return value of TRUE would indicate that the operation was successful, and a return value of FALSE would indicate that the operation could not be performed successfully or that the model was in an invalid state. Access-points (e.g., object/property model modification points) may also be included in meta model 210 for invoking semantics 230. The various model modification points (e.g., CreateObject) would invoke the respective semantic at the appropriate point. If an indication is received from the firing of semantics that one or more semantics had failed to complete successfully, for example, FALSE, the operation could then abort.

In 630, a type code is associated with the first and second set of classes. A type code is a unique identifier that specifies what type of meta data is being represented. Each item specified in the meta model, both objects and properties, would have a unique type code. In an exemplary embodiment of the present invention, UMA 200 includes a variable type, *TypeCode_*t*, which is* declared to hold the type codes. A predefined set of semantics is provided to the semantic registry 220 of meta model 210 in 640.

In 650, a plurality of discrete events, for example, as shown in Table One, are identified. The discrete events indicate occurrences where object/property model, 290 may be modified. In an exemplary embodiment of the present invention, each discrete event is assigned a constant to represent it, and a variable type, for example, *Event*_*t*, is declared to hold the event constants.

In 660, object/property interface 280 is provided. The object/property interface 280, for example, prevents a developer from directly accessing object/property model 290 and may include limiting the number of code paths by which a developer could modify object/property model 290. For example, if a developer wanted to destroy an object in object/property model 290, a request would have to be made to object/property interface 280 such as UMEObjectI:DestroyObject as listed in Appendix 1.

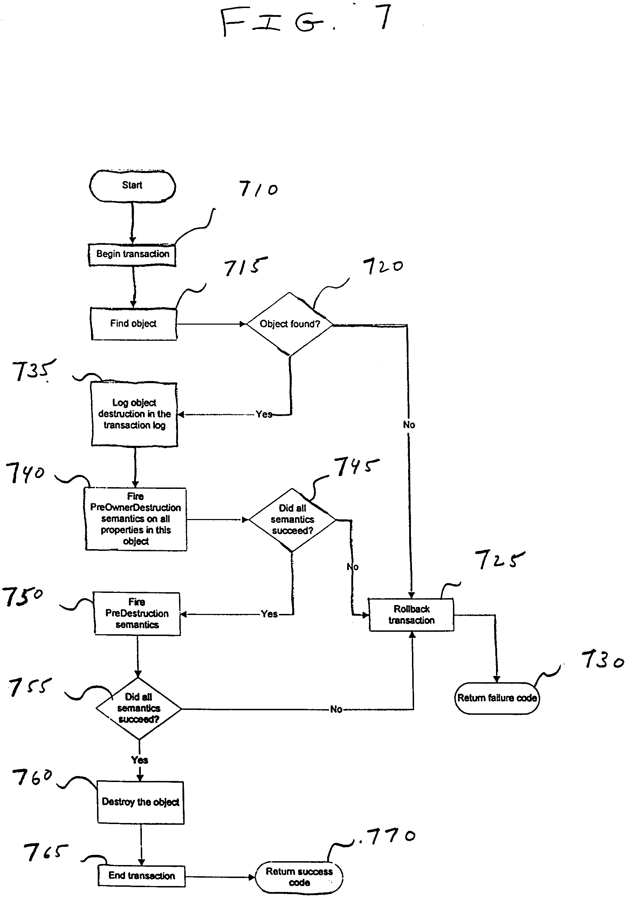

FIG. 7 shows an exemplary embodiment of object/property interface 280 executing DestroyObject request. As shown in FIG. 7, access to object/property model 290 is limited by object/property interface 280 handling the DestroyObject request. For example, in 710, object/property interface 280 communicates with transaction manager 285 to open a transaction upon receiving a request to destroy an object (e.g., DestroyObject function). In 715, object/property interface 280 communicates with object/property model 290 to find the object requested to be destroyed. In 720, object/property interface 280 determines whether the object was found. If not, in 725, transaction manager 285 rolls back the transaction pursuant to a request by object/property interface 280 and in 730 transaction manager returns a failure code to the calling module, for example, the user interface. If the object is found, however, in 735, object/property interface 280 provides transaction manager 285 with the object destruction information and transaction manager 285 logs the object destruction into transaction log 295.

In 740, object/property interface 280 fires the PreOwnerDestruction Semantics on all properties of the respective object. In 745, object/property interface 280 determines whether all semantics succeeded. If not, in 725, transaction manager 285 rolls back the transaction pursuant to a request by object/property interface 280 and 730 transaction manager returns a failure code to the calling module.

If all the PreOwner Destruction Semantics succeeded, in 750, object/property interface 280 fires the PreDestruction Semantics. In 755, object/property interface 280 determines whether all of the PreDestruction Semantics succeeded. If so, in 760, the object is destroyed, in 765, object/property interface 280 communicates to transaction manager 285 to end transaction, and in 770, 730, transaction manager 285 returns a success code to the calling module. If the PreDestruction Semantics failed, however, in 725, transaction manager 285 rolls back transaction pursuant to a request from object/property interface 280 and 730, and transaction manager 285 returns a failure code to the calling module.

To limit construction and destruction of objects, for example, object constructors and destructors are protected to prevent the developer from directly instantiating or destroying an object. To limit the creation, destruction and modification of properties, for example, the data members of the properties are made private. In an exemplary embodiment of the present invention, UMA 200 includes a class known as an accessor that includes an interface class, for example, UMEAccessorI. The accessor interface class is a friend class to the property and it is through accessors that access is gained to the data members. Accessors are provided with data values and instructions (e.g., "set the value" or "delete the property") and injected into properties. Accessors perform their actions and return a code indicating success or failure. Accessors are constructed by asking the property to provide one. This allows the property to construct an accessor that can handle the data type of the property. All operations on a property are conducted via an accessor, thus any code that the semantics require could be placed in the accessor base class that is supplied. The developer subclassing accessor would simply provide a data element and a way of reading and writing to it. Methods are provided on the accessor base class to allow the binding to a property.

As shown in FIG. 6, in 670, a transaction manager 285 is provided. The transaction manager 285 manages actions of a transaction and if the actions fail, the actions are undone or are wiped out. By starting a transaction at the beginning of a model manipulation, then monitoring the error states of the various semantics, the transaction manager 285 maintains the object/property model 290 in a valid state. In an exemplary embodiment of the present invention, transaction manager 285 records an exact image of object/property model 290 prior to the implementation of a change based on an action. If the action succeeds, the respective change is allowed to stand. If a failure occurs, then transaction manager 285 restores the old image. The transaction manager 285 may incrementally preserve images as the model changes.

As an example, within a single transaction the user is going to create an object and set its name. Upon successful creation of an object, the fact that the object was created and a handle to that object are stored in the transaction log 295. If the user then sets the name of the object to "Customer," the creation of the property is recorded and the old value (nothing) is saved to the log. If the user then sets the name again to "Cust," the old value ("Customer") is saved to the log. If all succeeds, then an object named "Cust" exists. On failure, however, transaction manager 285 will start rolling back: first, changing the name from "Cust" to "Customer"; second, deleting the existence of the name property altogether; and.finally, deleting the object. This restores object/property model 290 to the state that existed prior to the performance of the failed transaction.

In an exemplary embodiment of the present invention, the changed objects and properties as a result of an action are provided to object/property model 290 by object/property interface 280. If the semantics involved by the action fail, object/property interface 280 informs transaction manager 285 to undo the action. As a result, object/property model 290 is placed back in the state prior to the changed objects and properties being provided to the object property model 290 from the object/property interface 280 as a result of the failed action.

The embodiments described above are illustrative examples of the present invention and it should not be construed that the present invention is limited to these particular embodiments. Various changes and modifications may be effected by one skilled in the art without departing from the scope of the invention as defined in the appended claims.

### 1.1.1 Unbound Functions

### MetamodelReadInterface

Description
Retrieves the read interface on the singleton metamodel instance.

Signature
extern "C"
UMEMetaModelReadI * MetamodelReadInterface(void)

| Parameters | | |
|---|---|---|
| Name | Type | Description |
| <return> | R | The read interface to the UMA metamodel. |

### MetamodelWriteInterface

Description
Retrieves the write interface on the singleton metamodel instance.

Signature
extern "C"
UMEMetaModelReadI * MetamodelWriteInterface(void)

| Parameters | | |
|---|---|---|
| Name | Type | Description |
| <return> | R | The write interface to the UMA metamodel. |

### MetamodelUseInterface

Description
Retrieves the use interface on the singleton metamodel instance.

Signature
extern "C"
UMEMetaModelReadI * MetamodelUseInterface(void)

| Parameters | | |
|---|---|---|
| Name | Type | Description |
| <return> | R | The use interface to the UMA metamodel. |

### 1.1.2 UMEReferenceCountedI

Interface for reference counted objects. Several of the other interfaces extend this one. Conceptually, a reference-counted object should free itself from memory when its count hits zero. In practice, this is up to the implementing object and it may simply return itself to a pool.

### AddReference

Description
   Increments the reference count.
Signature
   void UMEReferenceCountedI::AddReference(void)

### RemoveReference

Description
   Decrements the reference count.
Signature
   void UMEReferenceCountedI::RemoveReference(void)

### 1.1.3 UMEPublisherI

The publisher side of a publish/subscribe pair.

### Subscribe

Description
Adds/removes a subscriber to/from the list of objects to notify.

Signature
Return_t UMEPublisherI::Subscribe(UMESubscriberI * Subscriber, bool Activate)

| Parameters | | |
|---|---|---|
| Name | Type | Description |
| <return> | R | The error code for the call |
| Subscriber | I | The subscriber to notify of events |
| Activate | I | True to add a subscription, False to remove a subscription |

### 1.1.4 UMESubscriberI

The subscriber side of a publish/subscribe pair.

### Notify

**Description**
The callback used by the publisher to notify the subscriber of events.

**Signature**
void UMESubscriberI::Notify(UMEPublisherI * Publisher, UMEEventI * Event)

**Parameters**

| Name | Type | Description |
|---|---|---|
| Publisher | I | Who is sending the event notification |
| Event | I | The event notification |

### 1.1.5 UMEEventI

### Extends: UMEReferenceCountedI

Events sent between a publish/subscribe pair. Subscribers must increment the reference count in their Notify method if they want to maintain access to the event; the publisher will remove his reference count upon completing the notifications.

### 1.1.6 UMEValueI

Provides base interface for data type wrappers. Data type wrappers are used when data values need to be passed to the metamodel (e.g. valid valid lists).

### 1.1.7 UMEMetamodelReadI

Interface for querying the metamodel. Though UMA 2.0 implements the metamodel as a C++ singleton using static methods, this interface exists to allow other components to standardize on a queriable interface.

### BuildVersion

Description
Retrieves the build number.

Signature
LWTString UMEMetamodelReadI::BuildVersion(void)

| Parameters | | |
|---|---|---|
| Name | Type | Description |
| <return> | R | The version string for the DLL |

### ConstructSignature

Description
Constructs a specified signature for the specified object.

Signature
Return_t UMEMetamodelReadI::ConstructSignature(UMEObjectI * Object, const SignatureGeneratorId_t & Generator, LWTString & Signature)

| Parameters | | |
|---|---|---|
| Name | Type | Description |
| <return> | R | The error code for the call |
| Object | I | The object for which signatures are desired |
| Generator | I | The specific generator to be employed |
| Signatures | O | The signature |

### ConstructSignatures

Description
Constructs all signatures for the specified object. The returned array will always have the same number of elements are there are registered signature generators. If a signature generator does not support a given object type, then its entry will be an empty string.
Signature
Return_t UMEMetamodelReadI::ConstructSignatures(UMEObjectI * Object, LWTOrderedVectorT<LWTString> & Signatures)

| Parameters | | |
|---|---|---|
| Name | Type | Description |
| <return> | R | The error code for the call |
| Object | I | The object for which signatures are desired |
| Signatures | O | The signatures |

### GetClipFlags

Description
Retrieves the clipboard flags associated with the object/property pair.

Signature
Return_t UMEMetamodelReadI::GetClipFlags(TypeCode_t Object, TypeCode_t Property, ClipFlags_t & ClipFlags)

| Parameters | | |
|---|---|---|
| Name | Type | Description |
| <return> | R | True if registered |
| Object | I | The typecode for the object |
| Property | I | The typecode for the property |
| ClipFlags | O | The clip flags |

### GetDatatype

Description
Retrieves the typecode of property's data type.

Signature
Return_t UMEMetamodelReadI::GetDatatype(TypeCode_t Code, TypeCode_t & Datatype)

| Parameters | | |
|---|---|---|
| Name | Type | Description |
| <return> | R | The error code for the call |
| Code | I | The typecode for the property |
| Datatype | O | The typecode for the data type |

### GetDefinifion

Description
Retrieves the definition stored in the metamodel of an item.

Signature
Return_t UMEMetamodelReadI::GetDatatype(TypeCode_t Code, LWTString & Definition)

| Parameters | | |
|---|---|---|
| Name | Type | Description |
| <return> | R | The error code for the call |
| Code | I | The typecode for the item |
| Definition | O | The definition |

### GetEntrySubscribers

Description
Retrieves the list of subscribers who are registered to receive notification upon destruction of a metamodel entry.
Signature
Return_t UMEMetamodelReadI::GetEntrySubscribers(TypeCode_t Code, LWTOrderedVectorT<TypeCode_t> & Subscribers)

| Parameters | | |
|---|---|---|
| Name | Type | Description |
| <return> | R | The error code for the call |
| Code | I | The typecode for the entry |
| Subscribers | O | The subscribers currently registered |

### GetFlags

Description
Retrieves the metamodel flags on an item.

*NB: These flags should not be confused with the item flags returned by UMEObjectI::Flags() or UMEPropertyI::Flags().*
Signature
Return_t UMEMetamodelReadI::GetFlags(TypeCode_t Code, MetamodelFlags_t & Flags)

| Parameters | | |
|---|---|---|
| Name | Type | Description |
| <return> | R | The error code for the call |
| Code | I | The typecode for the item |
| Flags | O | The metamodel flags |

### GetInheritableProperties

Description
Retrieves the typecodes of the properties that can be inherited for the specified object type.

Signature
Return_t UMEMetamodelReadI:GetInheritableProperties(TypeCode_t Code, LWTOrderedVectorT<TypeCode_t> & Properties)

| Parameters | | |
|---|---|---|
| Name | Type | Description |
| <return> | R | The error code for the call |
| Code | I | The typecode for the object |

Properties O An array of the inheritable property typecodes

### GetItemSize

Description
Retrieves the size of the item in bytes.

Signature
Return_t UMEMetamodelReadI::GetItemSize(TypeCode_t Code, size_t & Size)

| Parameters | | |
|---|---|---|
| Name | Type | Description |
| <return> | R | The error code for the call |
| Code | I | The typecode for the item |
| Size | O | The size of the item as defined by its factory |

### GetObjectTypes

Description
Retrieves the typecodes of the objects that are defined for the specified product. The result is filtered by the various flag fields.

Signature
Return_t UMEMetamodelReadI::GetObjectTypes(MetamodelFlags_t FlagsOn, MetamodelFlags_t FlagsOff, const ProductId_t & Product, MetamodelFlags_t ProductFlagsOn, MetamodelFlags_t ProductFlagsOff, LWTOrderedVectorT<TypeCode_t> & Objects)

| Parameters | | |
|---|---|---|
| Name | Type | Description |
| <return> | R | The error code for the call |
| FlagsOn | I | Flags that must be set for the object to be included |
| FlagsOff | I | Flags that must not be set for the object to be included |
| Product | I | An identifier for a product. Passed as a reference due to size. |
| ProductFlagsOn | I | Product-specific flags that must be on for the object to be included. |
| ProductFlagsOff | I | Product-specific flags that must not be on for the object to be included. |
| Objects | O | The object typecodes matching the criteria |

### GetOwneeTypes

Description
Retrieves the typecodes of objects that may be owned by the specified object.

Signature
Return_t UMEMetamodelReadI::GetOwneeTypes(TypeCode_t Code, LWTOrderedVectorT<TypeCode_t> & Ownees)

| Parameters | | |
|---|---|---|
| Name | Type | Description |
| <return> | R | The error code for the call |
| Code | I | The typecode for the object |
| Ownees | O | An array of the ownee typecodes |

### GetOwnerTypes

Description
Retrieves the typecodes of objects that may serve as the owner of the specified object.

Signature
Return_t UMEMetamodelReadI::GetOwnerTypes(TypeCode_t Code, LWTOrderedVectorT<TypeCode_t> & Owners)

| Parameters | | |
|---|---|---|
| Name | Type | Description |
| <return> | R | The error code for the call |
| Code | I | The typecode for the object |
| Owners | O | An array of the owner typecodes |

### GetPropertyTypes

Description
Retrieves the typecodes of the properties that are defined for the specified product. The result is filtered by the various flag fields.
Signature
Return_t UMEMetamodelReadI:GetPropertyTypes(MetamodelFlags_t FlagsOn, MetamodelFlags_t FlagsOff, ProductId_t & Product, MetamodelFlags_t ProductFlagsOn, MetamodelFlags_t ProductFlagsOff, LWTOrderedVectorT<TypeCode_t> & Properties)

| Parameters | | |
|---|---|---|
| Name | Type | Description |
| <return> | R | The error code for the call |
| FlagsOn | I | Flags that must be set for the property to be included |
| FlagsOff | I | Flags that must not be set for the property to be included |
| Product | I | An identifier for a product. Passed as a reference due to size. |
| ProductFlagsOn | I | Product-specific flags that must be on for the property to be included. |
| ProductFlagsOff | I | Product-specific flags that must not be on for the property to be included. |
| Properties | O | The property typecodes matching the criteria |

### GetPropertyUsages

Description
Retrieves the list of property types that can be set on the specified object.

Signature
Return_t UMEMetamodelReadI:GetPropertyUsages(TypeCode_t Code, LWTOrderedVectorT<TypeCode_t> & Usages)

| Parameters | | |
|---|---|---|
| Name | Type | Description |
| <return> | R | The error code for the call |
| Code | I | The typecode for the object |
| Usages | O | An array of the property typecodes |

### GetSubtypes

Description
Retrieves the typecodes of subtypes of the specified object.

Signature
Return_t UMEMetamodelReadI::GetSubtypes(TypeCode_t Code, LWTOrderedVectorT<TypeCode_t> & Subtypes)

**Parameters**

| Name | Type | Description |
|---|---|---|
| <return> | R | The error code for the call |
| Code | I | The typecode for the object |
| Subtypes | O | An array of the subtype typecodes |

### GetSupertype

Description
Retrieves the typecode of the immediate supertype for the specified object.

Signature
Return_t UMEMetamodelReadI::GetSupertype(TypeCode_t Code, TypeCode_t & Supertype)

| Parameters | | |
|---|---|---|
| Name | Type | Description |
| <return> | R | The error code for the call |
| Code | I | The typecode for the object |
| Supertype | O | The supertype typecode |

### IsInheritable

Description
Determines if the specified property is inheritable for the specified object.

Signature
boolean UMEMetamodelReadI::IsInheritable(TypeCode_t Object, TypeCode_t Property)

| Parameters | | |
|---|---|---|
| Name | Type | Description |
| <return> | R | True if inheritable |
| Object | I | The object's typecode |
| Property | I | The property's typecode |

### IsRegistered

Description
Determines if the specified typecode is registered with the metamodel.

Signature
boolean UMEMetamodelReadI:IsRegistered(TypeCode_t Code)

| Parameters | | |
|---|---|---|
| Name | Type | Description |
| <return> | R | True if registered |
| Code | I | The typecode for the item |

### IsUserDefined

Description
Determines if the specified typecode is was registered by the user or Add-In code...i.e. is it a UDP or UDO?

Signature
boolean UMEMetamodelReadI:IsUserDefined(TypeCode_t Code)

| Parameters | | |
|---|---|---|
| Name | Type | Description |
| <return> | R | True if user-defined |
| Code | I | The typecode for the item |

### Lookup

Description
Provides translations between typecodes and names of metamodel entries. The name provided or read will be interpreted through the nomenclature specified.

Signature
Variant A: TypeCode_t UMEMetamodelReadI::Lookup(const LWTString & Name, NomenclatureId_t & Nomenclature)
Variant B: LWTString UMEMetamodelReadI::Lookup(TypeCode_t Code, NomenclatureId_t & Nomenclature)

| Parameters | | |
|---|---|---|
| Name | Type | Description |
| <return> | R | Variant A: the typecode associated with the name Variant B: the name associated with the typecode |
| Name | I | A name for the metamodel entry |
| Code | I | The typecode for the metamodel entry |
| Nomenclature | I | An identifier for a nomenclature. Passed as a reference due to size. |

### M2Type

Description
Determines what kind of metamodel entry corresponds to the typecode. The return value will be one of the following UMEMetamodelReadI constants:

| Constant | Description |
|---|---|
| kIsUnknown | The typecode is not known to the metamodel |
| kIsObjectImplementation | The typecode represents an object implementation type |
| kIsObject | The typecode represents an object |
| kIsPropertyDatatype | The typecode represents a property data type |
| kIsProperty | The typecode represents a property |
| kIsCategory | The typecode represents a category |

Signature
long UMEMetamodelReadI::M2Type(TypeCode_t Code) const

| Parameters | | |
|---|---|---|
| Name | Type | Description |
| <return> | R | A constant indicating the M2 type of the typccode |
| Code | I | The typecode to be checked |

### Resolveld

Description
   Converts an object id to a pointer to the object.
Signature
   Variant A: UMEObjectI * UMEMetamodelReadI::ResolveId (Id_t Id)
   Variant B: UMEObjectI * UMEMetamodelReadI::Resolveld(ObjectId_t Id)

| Parameters | | |
|---|---|---|
| Name | Type | Description |
| <return> | R | A pointer to the object having the specified id, NULL if not found. |
| Id | I | The object's id |

### 1.1.8 UMEMetamodelWritel

The write interface generally support two variants for each of the registration methods. One variant uses primitive C++ types, such as const char * and TypeCode_t *. The second variant uses wrapper class such as const LWTString & and const LWTOrderedVectorT<TypeCode_t> &. The former type is faster to construct, but more dangerous, and is intended for the code generated by MMGen.exe. The latter can be somewhat slower due to the need to construct the wrapper and container classes, but is safer, and is intended for "hand coding."

**Applies To**

| | | | | |
|---|---|---|---|---|
| O | O | **P** | **P** | **C** |
| b | b | r | r | a |
| j | j | **o** | o | t |
| e | e | p | e | e |
| c | c | e | p | g |
| t | t | t | r | o |
| I | | y | t | r |
| m | | D | y | y |

| | | | | | | |
|---|---|---|---|---|---|---|
| kSequenceImportant | | | | ✔ | | The sequence of values in the property is significant and must be maintained. |
| kPreFetchType | | | | ✔ | | The property starts as a PreFetch property |
| kCalculated | | | | ✔ | | The property has a value that is calculated by semantics and should not be set by user. |
| kPersistenceUnit | | ✔ | | | | The object is a persistence unit. |
| kWorkspace | | ✔ | | | | The object is a workspace. |
| kStrict | | | | | ✔ | The property may contain only those values found in the valid values list. |

### DefaultSemanticPackage

Description
Retrieves the default semantic package built into the metamodel. This package is used to hold those semantics necessary for the modeling engine to function, as well as any the user wishes to add.

Signature
UMESemanticPackageI & UMESemanticPackagel::DefaultSemanticPackage(void) const

| Parameters | | |
|---|---|---|
| Name | Type | Description |
| <return> | R | The semantic package built into the metamodel |

### RegisterCategory

Description
Registers a new category in the metamodel. Any member typecodes supplied should already be registered with the metamodel. Additional members can be added at a later time using UMEMetamodelWriteI::RegisterCategoryMembers.
The data passed in are copied into the metamodel; the source memory can be freed after this call returns.

Signature
Variant A: Return_t UMEMetamodelWriteI::RegisterCategory(TypeCode_t Code, const Char_t * NameBuffer, const Char_t * DescriptionBuffer, TypeCode_t * MembersBuffer, MetamodelFlags_t Flags)
Variant B: Return_t UMEMetamodelWriteI::RegisterCategory(TypeCode_t Code, const LWTString & Name, const LWTString & Description, const

**LWTOrderedVectorT<TypeCode_t> & Members, MetamodelFlags_t Flags)**

| **Parameters** | | |
|---|---|---|
| **Name** | **Type** | **Description** |
| <return> | R | The error code for the call |
| Code | I | The typecode for the category |
| Name | I | The internal name for the category |
| NameBuffer | I | A null-terminated buffer with the internal name for the category. All metamodel entries must have a name; a null pointer here will prevent registration. |
| Description | I | The description of the category |
| DescriptionBuffer | I | A null-terminated buffer with the description of the category. If no description is available, pass a null pointer. |
| Members | I | A list of the members' typecodes |
| MembersBuffer | I | A list of the members' typecodes. This must terminate with an entry set to TypeCodes::Undefined. |
| Flags | I | Metamodel flags (see description above) |

### RegisterCategoryMembers

Description
Adds or subtracts members from an existing category. Member typecodes should already be registered with the metamodel.
The data passed in are copied into the metamodel; the source memory can be freed after this call returns.

Signature
Variant A: Return_t UMEMetamodelWriteI::RegisterCategoryMembers(TypeCode_t Code, TypeCode_t * MembersBuffer, bool Add)
Variant B: Return_t UMEMetamodelWriteI::RegisterCategoryMembers(TypeCode_t Code, const LWTOrderedVectorT<TypeCode_t> & Members, bool Add)

| **Parameters** | | |
|---|---|---|
| **Name** | **Type** | **Description** |
| <return> | R | The error code for the call |
| Code | I | The typecode for the category |
| Members | I | A list of the member typecodes |
| MembersBuffer | I | A list of the members' typecodes. This must terminate with an entry set to TypeCodes::Undefined. |
| Add | I | True to add the members from the list, False to remove them |

### RegisterNomenclature

Description
Registers a nomenclature with the metamodel.
The data passed in are copied into the metamodel; the source memory can be freed after this call returns.

Signature
Return_t UMEMetamodelWriteI::RegisterNomenclature(const NomenclatureId_t & Nomenclature, const LWTString & Name)

| **Parameters** | | |
|---|---|---|
| Name | Type | Description |
| <return> | R | The error code for the call |
| Nomenclature | I | The id of the nomenclature |
| Name | I | The name of the nomenclature |

### RegisterNomenclatureEntry

Description
Registers an entry into a nomenclature.
The data passed in are copied into the metamodel; the source memory can be freed after this call returns.

Signature
Return_t UMEMetamodelWriteI::RegisterNomenclatureName(const NomenclatureId_t & Nomenclature, TypeCode_t Code, const LWTString & Name)

| **Parameters** | | |
|---|---|---|
| Name | Type | Description |
| <return> | R | The error code for the call |
| Nomenclature | I | The id of the nomenclature |
| Code | I | The typecode of the metamodel item |
| Name | I | The name to associate with the typecode |

### RegisterNomenclatureNames

**Description**
Allows bulk registration of names for a nomenclature. The buffer should contain alternating typecodes and null-terminated strings. The buffer must be terminated with the value TypeCodes::Undefined.
The data passed in are copied into the metamodel; the source memory can be freed after this call returns.

**Signature**
Return_t UMEMetamodelWriteI::RegisterNomenclatureNames(const NomenclatureId_t & Nomenclature, char * Buffer)

**Parameters**

| Name | Type | Description |
|---|---|---|
| <return> | R | The error code for the call |
| Nomenclature | I | The id of the nomenclature |
| Buffer | I | A buffer of typecode/null-terminated string pairs |

### RegisterObject

Description
Registers a new object in the metamodel.
The data passed in are copied into the metamodel; the source memory can be freed after this call returns.

Signature
Variant A: Return_t UMEMetamodelWriteI::RegisterObject(TypeCode_t Code, const Char_t * NameBuffer, const Char_t * DescriptionBuffer, TypeCode_t Implementation, TypeCode_t Supertype, TypeCode_t * OwnersBuffer, MetamodelFlags_t Flags, TypeCode_t * UDOCode = NULL)
Variant B: Return_t UMEMetamodelWriteI::RegisterObject(TypeCode_t Code, const LWTString & Name, const LWTString & Description, TypeCode_t Implementation, TypeCode_t Supertype, const LWTOrderedVectorT<TypeCode_t> & Owners, MetamodelFlags_t Flags, TypeCode_t * UDOCode = NULL)

| **Parameters** | | |
|---|---|---|
| Name | Type | Description |
| <return> | R | The error code for the call |
| Code | I | The typecode for the object |
| Name | I | The internal name for the object |
| NameBuffer | I | A null-terminated buffer with the internal name for the object. All metamodel entries must have a name; a null pointer here will prevent registration. |
| Description | I | The description of the object |
| DescriptionBuffer | I | A null-terminated buffer with the description of the object. If no description is available, pass a null pointer. |
| Implementation | I | The typecode for the object implementation that his object will use |
| Supertype | I | The supertype of the object |
| Owners | I | The list of valid owners' typecodes for this object. All objects, except UOEnvironment, must have at least one valid owner type. |
| OwnersBuffer | I | The list of valid owners' typecodes for this object. All objects, except UOEnvironment, must have at least one valid owner type. The buffer must terminate with an entry set to TypeCodes::Undefined. |
| Flags | I | Metamodel flags (see description above) |
| UDOCode | O | Populated with typecode assigned to the UDO if Code is TypeCodes::Undefined. |

### RegisterObjectImplementation

Description
Registers a new implementation for objects.
The metamodel does not assume responsibility for cleaning up factories-this allows these objects to be allocated off the heap or statically in the data segment. Instead, if a subscriber is provided, the metamodel will notify the subscriber when the entry for the property data type is destroyed; the subscriber can take appropriate cleanup action at that time. All other information is copied into the metamodel and can be freed when this method returns.

Signature
Variant A: Return_t UMEMetamodelWriteI::RegisterObjectImplementation(TypeCode_t Code, const Char_t * NameBuffer, const Char_t * DescriptionBuffer, UMEObjectFactoryl * Factory, MetamodelFlags_t Flags, UMESubscriberI * Subscriber = NULL)
Variant B: Return_t UMEMetamodelWriteI::RegisterObjectImplementation(TypeCode_t Code, const LWTString & Name, const LWTString & Description, UMEObjectFactoryl * Factory, MetamodelFlags_t Flags, UMESubscriberI * Subscriber = NULL)

| **Parameters** | | |
|---|---|---|
| **Name** | **Type** | **Description** |
| <return> | R | The error code for the call |
| Code | I | The typecode for the object implementation |
| Name | I | The internal name for the object implementation |
| NameBuffer | I | A null-terminated buffer with the internal name for the object implementation. All metamodel entries must have a name; a null pointer here will prevent registration. |
| Description | I | The description of the object implementation |
| DescriptionBuffer | I | A null-terminated buffer with the description of the object implementation. If no description is available, pass a null pointer. |
| Factory | I | The factory capable of constructing instances of the object implementation |
| Flags | I | Metamodel flags (see description above) |
| Subscriber | I | The subscriber to notify when this metamodel entry is destroyed |

### RegisterProperty

Description
Registers a new property in the metamodel. For application-defined properties, the typecode should be specified. To register a UDP, specify a typecode of TypeCodes::Undefined for Code; the assigned typecode will be placed in UDPCode.
The data passed in are copied into the metamodel; the source memory can be freed after this call returns.

Signature
Variant A: Return_t UMEMetamodelWriteI::RegisterProperty(TypeCode_t Code, const Char_t * NameBuffer, const Char_t * DescriptionBuffer, TypeCode_t Datatype, MetamodelFlags_t Flags, const char * DefaultBuffer, const char * ValidValuesBuffer, TypeCode_t * UDPCode = NULL)
Variant B: Return_t UMEMetamodelWriteI::RegisterObjectImplementation(TypeCode_t Code, const LWTString & Name, const LWTString & Description, TypeCode_t Datatype, MetamodelFlags_t Flags, UMEValueI * Default = NULL, const LWTOrderedVectorT<UMEValueI *> * ValidValues = NULL, TypeCode_t * UDPCode = NULL)

| **Parameters** | | |
|---|---|---|
| **Name** | **Type** | **Description** |
| <return> | R | The error code for the call, TypeCodes::Undefined to register a UDP. |
| Code | I | The typecode for the property. |
| Name | I | The internal name for the property. |
| NameBuffer | I | A null-terminated buffer with the internal name for the property. All metamodel entries must have a name; a null pointer here will prevent registration. |
| Description | I | The description of the property |
| DescriptionBuffer | I | A null-terminated buffer with the description of property. If no description is available, pass a null pointer. |
| Datatype | I | The typecode for the data type used by this property. |
| Flags | I | Metamodel flags (see description above). |
| Default | I | The default value for the property. |
| DefaultBuffer | I | A buffer that the factory for the data type is capable of interpreting in order to determine the default value. |
| ValidValues | I | A list of the valid values for the property. |
| ValidValuesBuffer | I | A buffer that the factory for the data type is capable of interpreting in order to determine the valid values. |
| UDPCode | O | Populated with typecode assigned to the UDP if Code is TypeCodes::Undefined. |

### RegisterPropertyDatatype

Description
Registers a new data type for properties with the metamodel.
The metamodel does not assume responsibility for cleaning up factories-this allows these objects to be allocated off the heap or statically in the data segment. Instead, if a subscriber is provided, the metamodel will notify the subscriber when the entry for the property data type is destroyed; the subscriber can take appropriate cleanup action at that time. All other information is copied into the metamodel and can be freed when this method returns.

Signature
Variant A: Return_t UMEMetamodelWriteI::RegisterPropertyDatatype(TypeCode_t Code, const Char_t * NameBuffer, const Char_t * DescriptionBuffer, UMEPropertyFactoryI * Factory, MetamodelFlags_t Flags, UMESubscriberI * Subscriber = NULL)
Variant B: Return_t UMEMetamodelWriteI::RegisterPropertyDatatype(TypeCode_t Code, const LWTString & Name, const LWTString & Description, UMEPropertyFactoryI * Factory, MetamodelFlags_t Flags, UMESubscriberI * Subscriber = NULL)

| **Parameters** | | |
|---|---|---|
| **Name** | **Type** | **Description** |
| <return> | R | The error code for the call |
| Code | I | The typecode for the property data type |
| Name | I | The internal name for the data type |
| NameBuffer | I | A null-terminated buffer with the internal name for the data type. All metamodel entries must have a name; a null pointer here will prevent registration. |
| Description | I | The description of the data type |
| DescriptionBuffer | I | A null-terminated buffer with the description of the data type. If no description is available, pass a null pointer. |
| Factory | I | The factory capable of constructing instances of the data type |
| Flags | I | Metamodel flags (see description above) |
| Subscriber | I | The subscriber to notify when this metamodel entry is destroyed |

### RegisterPropertyUsage

Description
Registers or unregisters the associations between a specified object and properties. The information will be copied into the metamodel, so all buffers car be freed once this method returns. Successive calls to this method with Add equal to True append information.

Signature
Variant A: Return_t UMEMetamodelWriteI::RegisterPropertyUsage(TypeCode_t Object, TypeCode_t * PropertiesBuffer, bool Add)
Variant B: Return_t UMEMetamodelWriteI::RegisterPropertyUsage(TypeCode_t Object, const LWTOrderedVectorT<TypeCode_T> & Properties, bool Add)

| **Parameters** | | |
|---|---|---|
| **Name** | **Type** | **Description** |
| <return> | R | The error code for the call |
| Object | I | The object |
| Properties | I | A list of the properties associated with the object type |
| PropertiesBuffer | I | A list of the properties associated with the object type. This buffer must be terminated with an entry having the value of TypeCodes::Undefined. |
| Add | I | True to add the association, False to remove the association. |

### RegisterPropertyUsages

Description
Allows bulk registration of object/property associations. The information will be copied into the metamodel, so all buffers can be freed once this method returns. This method can only add associations.
The following set of grammar productions describes the format of the buffer:

| | | |
|---|---|---|
| Buffer | - | EntryList Terminator |
| EntryList | - | Entry |
| EntryList | - | EntryList Entry |
| Entry | - | Object PropertyList Terminator |
| PropertyList | - | Property |
| PropertyList | - | PropertyList Property |
| Terminator | - | *TypeCodes::Undefined* |
| Object | - | *any object's typecode* |
| Property | - | *any property's typecode* |

Signature
Return_t UMEMetamodelWriteI::RegisterPropertyUsages(TypeCode_t * Buffer)

| **Parameters** | | |
|---|---|---|
| **Name** | **Type** | **Description** |
| <return> | R | The error code for the call |
| Buffer | I | A buffer of typecodes |

### RegisterSignatureGenerator

Description
Registers a signature generator into the model.

Signature
Return_t UMEMetamodelWriteI::RegisterSignatureGenerator( const SignatureGeneratorId_t & Id, UMESignatureGeneratorI * Generator, const LWTString & Name)

| **Parameters** | | |
|---|---|---|
| Name | Type | Description |
| <return> | R | The error code for the call |
| Id | I | The id for the signature generator |
| Generator | I | The generator |
| Name | I | The name of the generator for display purposes |

### 1.1.9 UMEMetamodelUsel

This is the interface that is used for metamodel operations other than reading and writing the metamodel.

### CreateAccessor

Description
Creates an accessor appropriate for the property type. This allows construction of accessors in the absence of a property. This method employs the CreateAccessor method exposed by property factories.

Signature
UMEAccessorI * UMEMetamodelUseI::CreateAccessor(TypeCode_t Code)

| **Parameters** | | |
|---|---|---|
| Name | Type | Description |
| <return> | R | The accessor |
| Code | I | The typecode of the property for which an accessor is needed |

### CreateObject

Description
Constructs a new object. If no owning object is specified, the object is made a child of the environment (if legal). If the object cannot be constructed, the output parameter will be set to NULL. No checks will be made on the initial content of Object.

Signature
Result_t UMEMetamodelReadI::CreateObject(TypeCode_t Code, UMEObjectI * Owner, UMEObjectI * & Object, UMEConstructionContext * Reserved = NULL)

| **Parameters** | | |
|---|---|---|
| Name | Type | Description |
| <return> | R | The error code for the call |
| Code | I | The typecode of the object |
| Owner | I | The owning object |
| Object | O | The object created, NULL if not created |
| Reserved | | Reserved for future use |

### GetInstances

Description
Retrieves the instances of the specified object type that exist in UMA. This list is not filtered for a given persistence unit; that filtering can be accomplished quickly using UMEObjectI::Owner.¹
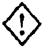 Programming Alert For performance reasons, the pointer returned by Variant A of this method might be a pointer to the actual data store used by the metamodel. You *must* respect the const modifier and not modify the data in any way. If you want to alter the data, you must use Variant B.

Signature
Variant A: Return_t UMEMetamodelUseI::GetInstances(TypeCode_t Code, const LWTOrderedVectorT<UMEObjectI *> * & Instances)
Variant B: Return_t UMEMetamodelUseI::GetInstances(TypeCode_t Code, LWTOrderedVectorT<UMEObjectI*> & Instances)

| **Parameters** | | |
|---|---|---|
| Name | Type | Description |
| <return> | R | The error code for the call |
| Code | I | The typecode for the object |
| Instances | O | A list of the instances. |

### 1.1.10 UMESemanticPackagel

Semantic packages are groups of logically-related semantics...e.g. the "Oracle" semantics. There is a default package built into the metamodel to handle semantics required for the modeling engine's functions. Other packages may be constructed and registered for model elements as desired.

### Identifier

Description
Retrieves the identifier for the package.

Signature
SemanticPackageId_t UMESemanticPackageI::Identifier(void) const

| **Parameters** | | |
|---|---|---|
| Name | Type | Description |
| <return> | R | The id of the package |

### RegisterObjectSemantic

Description
Adds an object semantic into the package.

Signature
Rcturn_t UMESemanticPackageI::RegisterObjectSemantic(TypeCode_t Code, UMEObjectSemanticI & Semantic, bool Internal)

| **Parameters** | | |
|---|---|---|
| Name | Type | Description |
| <return> | R | The error code of the call |
| Code | I | The object typecode for which the semantic applies |
| Semantic | I | The semantic |
| Internal | I | Is this semantic invoked internally (True) or via the API (False) |

### RegisterPropertySemantic

Description
Adds a property semantic into the package.

Signature
Return_t UMESemanticPackageI::RegisterPropertySemantic(TypeCode_t Object, TypeCode_t Property, UMEObjectSemanticI & Semantic, bool Internal)

| **Parameters** | | |
|---|---|---|
| Name | Type | Description |
| <return> | R | The error code of the call |
| Object | I | The object typecode for which the semantic applies |
| Property | I | The property typecode for which the semantic applies |
| Semantic | I | The semantic |
| Internal | I | Is this semantic invoked internally (True) or via the API (False) |

### 1.1.11 UMEObjectFactoryl

Interface for all factory classes used to create instances of objects implementations. These implementations are then aliased by the metamodel to the desired object type.

### ClassSize

Description
Retrieves the size of the object that will be allocated by CreateObject(). This is used by the UMEMetamodelReadI::GetItemSize() method.

Signature
size_t UMEObjectFactoryI::ClassSize(TypeCode_t Code)

| **Parameters** | | |
|---|---|---|
| Name | Type | Description |
| <return> | R | The size of the object |
| Code | I | The typecode of the item |

### CreateObject

Description
Creates an instance of the object.

Signature
UMEObjectI * UMEObjectFactoryI::CreateObject(TypeCode_t Code, UMEObjectI * Owner, UMEFactoryContext * Reserved =NULL)

**Parameters**

| Name | Type | Description |
|---|---|---|
| <return> | R | The newly created object |
| Code | I | The typecode of the object to be created |
| Owner | I | The object that will own the item |
| Reserved | | Reserved for future use |

### DestroyObject

Description
Called by the metamodel to deallocate the memory for an object. This method, in combination with CreateObject(), allows the factory to implement custom memory allocation schemes, scarring, etc.

Signature
void UMEObjectFactoryI::DestroyObject(UMEObjectI * Object)

| **Parameters** | | |
|---|---|---|
| Name | Type | Description |
| Item | I | The object to destroy |

### 1.1.12 UMEPropertyFactoryl

Interface for all factory classes used to create instances of property data types. These data types are then aliased by the metamodel to create the desired properties.

### ClassSize

Description
Retrieves the size of the property that will be allocated by CreateProperty(). This is used by the UMEMetamodelReadI::GetItemSize() method.

Signature
size_t UMEPropertyFactoryI::ClassSize(TypeCode_t Code)

| **Parameters** | | |
|---|---|---|
| Name | Type | Description |
| <retun> | R | The size of the class |
| Code | I | The typecode of the property |

### CreateProperty

Description
Creates an instance of the property.

Signature
UMEPropertyI * UMEPropertyFactoryI::CreateProperty(TypeCode_t Code, UMEObjectI * Owner, UMEFactoryContext * Reserved = NULL)

| Parameters | | |
|---|---|---|
| Name | Type | Description |
| <return> | R | The newly created property |
| Code | I | The typecode of the property to be created |
| Owner | I | The object that will own the property |
| Reserved | | Reserved for future use |

### CreateAccessor

Description
Creates an accessor appropriate for the property.

Signature
UMEAccessorI * UMEPropertyFactoryI::CreateAccessor(TypeCode_t Code)

| Parameters | | |
|---|---|---|
| Name | Type | Description |
| <return> | R | The accessor |
| Code | I | The typecode of the property for which an accessor is needed |

### DestroyAccessor

Description
Called by the metamodel to deallocate the memory for an accessor.

Signature
void UMEPropertyFactoryI:DestroyAccessor(UMEAccessorI * Object)

| Parameters | | |
|---|---|---|
| Name | Type | Description |
| Item | I | The accessor to destroy |

### DestroyProperty

Description
Called by the metamodel to deallocate the memory for a property. This method, in combination with CreateProperty(), allows the factory to implement custom memory allocation schemes, scarring, etc.

Signature
void UMEPropertyFactoryI::DestroyProperty(UMEPropertyI * Object)

| Parameters | | |
|---|---|---|
| Name | Type | Description |
| Item | I | The property to destroy |

### 1.1.13 UMEObjectI

Interface for all objects within the UMA model.

### FindProperty

Description
Locates the desired property on the object.

Signature
UMEPropertyI * UMEObjectI:FindProperty(TypeCode_t Type, Boolean ConstructIfNull = False, Boolean ConstructIfPreFetch = False)

| Parameters | | |
|---|---|---|
| Name | Type | Description |
| <return> | R | The property, NULL if not found or constructed. |
| Type | I | The typecode of the desired property. |
| ConstructIfNull | I | If set to True, and the property is not found, it will be constructed and returned. |
| ConstructIfPreFetch | I | If set to True, and the property is not found and is marked in the metamodel as a PreFetch property, it will be constructed and returned. |

### Flags

Description
Retrieves the flags set upon the object. The flags are represented by bits ORed together.
*NB: These flags should not be confused with metamodel flags on an item type.*

Signature
ItemFlags_t UMEObjectI::Flags(void) const

| Parameters | | |
|---|---|---|
| Name | Type | Description |
| <return> | R | The bit flags on the item |

### GetProperty

Description
Retrieves the value of the specified property for the object.

Signature
Return_t UMEObjectI::GetProperty(TypeCode_t Type, UMEAccessorI & Accessor)

**Parameters**

| Name | Type | Description |
|---|---|---|
| <retum> | R | The error code for the call |
| Type | I | The typecode of the desired property. |
| Accessor | I/O | The accessor used to retrieve the value |

### Id

Description
Retrieves the local id from the object

Signature
Id_t UMEObjectI::Id(void) const

| Parameters | | |
|---|---|---|
| Name | Type | Description |
| <return> | R | Local id of the object |

### lsEqual

Description
Determines if two objects are equal.

Signature
Boolean UMEObjectI::IsEqual(UMEObjectI & Object, UMEObjectEqualityStrategyl * ObjectStrategy = NULL, UMEPropertyEqualityStrategyI * PropertyStrategy = NULL)

| Parameters | | |
|---|---|---|
| Name | Type | Description |
| <return> | R | True if the objects test as equal |
| Object | I | The other side of the comparison |
| ObjectStrategy | I | A strategy object that encapsulates the comparison algorithm for objects. If not supplied, the default algorithm is used. |
| PropertyStrategy | I | A strategy object that encapsulates the comparison algorithm for properties. If not supplied, the default algorithm is used. |

### IsPropertyEqual

Description
Determines if two properties are equal. By default, properties are equal if they belong to the same type of object, have the same typecode, and have the same value. Note that sorting is not performed on vector properties in the default strategy.

Signature
Return_t UMEObjectI::IsPropertyEqual (UMEObjectI & Object, TypeCode_t Type, UMEPropertyEqualityStrategyI * Strategy = NULL)

| **Parameters** | | |
|---|---|---|
| Name | Type | Description |
| <return> | R | True if the properties test as equal |
| Object | I | The object owning the other property |
| Type | I | The typecode of the property |
| PropertyStrategy | I | A strategy object that encapsulates the comparison algorithm for properties. If not supplied, the default algorithm is used. |

### Is Type

**Description**
Determines if the object is of the specified type.

**Signature**
boolean UMEObjectI::IsType (TypeCode_t Type) const

| **Parameters** | | |
|---|---|---|
| Name | Type | Description |
| <retum> | R | True if item is of the specified type |
| Type | I | The typecode to test |

### NullProperty

**Description**
Deletes the property from the object.

**Signature**
Return_t UMEObjectI::NullProperty( TypeCode_t Type, UMEAccessorI & Accessor)

| **Parameters** | | |
|---|---|---|
| Name | Type | Description |
| <return> | R | The error code for the call |
| **Type** | I | The typecode of the desired property. |
| Accessor | I | The accessor used to destroy the property |

### Owner

**Description**
Locates the owner of the desired type. This method can traverse multiple levels of ownership to locate the correct object.

**Signature**
UMEObjectI * UMEObject::IsType( TypeCode_t Type = TypeCodes::Undefined) const

**Parameters**

| Name | Type | Description |
|---|---|---|
| <return> | R | The owning object of the specified type, NULL if none found. |
| Type | I | The typecode of the desired owner. If the default value is used, the immediate owner is returned. |

### SetProperty

**Description**
Sets the value of the specified property for the object.

**Signature**
Return_t UMEObjectI::SetProperty(TypeCode_t Type, UMEAccessorI & Accessor)

| **Parameters** | | |
|---|---|---|
| Name | Type | Description |
| <return> | R | The error code for the call |
| Type | I | The typecode of the desired property. |
| Accessor | I | The accessor used to set the value |

### Touch

**Description**
Allows semantic code to flag logically changed objects so they appear in the transaction log. Touching an object marks it as modified even if no properties on the object changed. The touch can be removed by calling the method with the parameter set to False.

**Signature**
void UMEObjectI::Touch (Boolean On)

| **Parameters** | | |
|---|---|---|
| Name | Type | Description |
| On | I | True = modified. False = unmodified |

### TouchProperty

**Description**
Allows semantic code to flag logically changed properties so they appear in the transaction log. Touching a property marks it as modified even if its value did not change. The touch can be removed by calling the method with the parameter set to False.

**Signature**
void UMEObjectI::Touch (Boolean On)

**Parameters**

| Name | Type | Description |
|---|---|---|
| <return> | R | The error code for the call |
| Type | I | Typecode of the property |
| On | I | True = modified, False = unmodified |

### TxMgr

Description
Retrieves the transaction manager monitoring the object.

Signature
UMETxMgr * UMEObjectI::TxMgr (void) const

| Parameters | | |
|---|---|---|
| Name | Type | Description |
| <return> | R | The transaction manager, NULL if one is not active. |

### Type

**Description**
Retrieves the typecode of the object.

**Signature**
TypeCode_t UMEObjectI::Type (void) const

| **Parameters** | | |
|---|---|---|
| Name | Type | Description |
| <return> | R | The typecode of the item |

### VisitProperty

**Description**
Locates the desired property and invokes the visitor upon it.

**Signature**
Retum_t UMEObjectI::VisitProperty(TypeCode_t Type, UMEVisitorI &Visitor)

| **Parameters** | | |
|---|---|---|
| Name | Type | Description |
| <return> | R | The error code for the call |
| Type | I | The typecode of the desired property. |
| Visitor | I/O | The visitor that will be employed |

### 1.1.14 UMEPropertyl

### CreateAccessor

### Description

Constructs an accessor for the property. This duplicates the functionality found in the property factory (which is exposed via UMEMetamodelUseI), and is provided for performance. For this reason, it is preferable that this not be implemented simply as a call to UMEMetamodelUseI::CreateAccessor.

### Signature

UMEAccessorI * UMEPropertyI::CreateAccessor(void)

| **Parameters** | | |
|---|---|---|
| Name | Type | Description |
| <return> | R | The accessor |

### Flags

**Description**
Retrieves the flags set upon the item. The flags are represented by bits ORed together.
*NB: These flags should not be confused with metamodel flags on an item type.*

**Signature**
ItemFlags_t UMEPropertyI::Flags(void) const

| Parameters | | |
|---|---|---|
| Name | Type | Description |
| <return> | R | The bit flags on the property |

### IsType

**Description**
Determines if the item is of the specified type.

**Signature**
boolean UMEPropertyI::IsType (TypeCode_t Type) const

| **Parameters** | | |
|---|---|---|
| Name | Type | Description |
| <return> | R | True if property is of the specified type |
| **Type** | I | The typecode to test |

### Type

**Description**
Retrieves the typecode of the item.

**Signature**
TypeCode_t UMEPropertyI::Type (void) const

| **Parameters** | | |
|---|---|---|
| Name | Type | Description |
| <return> | R | The typecode of the property |

### 1.1.15 UMEAccessorl

Accessors control access to properties...setting values, getting values, and destroying properties. They ensure that the transaction manager and semantic mechanisms are managed correctly.

UMEAccessorI defines the following action constants. Action constants determine what the accessor will attempt to do when used in a SetProperty call.

| | |
|---|---|
| **Constant** | **Description** |
| kReplace | Replace the values in the property with the values in the accessor. |
| kAppend | Append the values in the accessor to the values in the property. For scalar properties, this is the same as kReplace. |
| kDelete | Delete the values in the accessor from the values in the property. |
| kOverwriteFlags | Change the flags on the property to match the flags in the accessor. |
| kForceRefresh | By default, an accessor will not attempt to modify the values in a property if the new values match the old values. If this action code is set, the modification will be forced. |

### ActionCodes

**Description**
Retrieves the action codes currently set on the accessor.

**Signature**
unsigned long UMEAccessorI:ActionCodes(void) const

| **Parameters** | | |
|---|---|---|
| Name | Type | Description |
| <return> | R | The current action codes |

### Flags

**Description**
Retrieves the property flags currently set on the accessor.

**Signature**
ItemFlags_t UMEAccessorI:Flags(void) const

| **Parameters** | | |
|---|---|---|
| Name | Type | Description |
| <return> | R | The current flags |

### GetPropertyValue

**Description**
Retrieves the value of the specified property. This method allows the user to bypass the property lookup inherent in UMEObjectI::GetProperty, if a reference to the property is available.

**Signature**
Return_t UMEAccessorI:GetPropertyValue(UMEObjectI * Object, UMEPropertyI * property)

| **Parameters** | | |
|---|---|---|
| Name | Type | Description |
| <return> | R | The error code for the call |
| Object | I | A reference to the object owning the property |
| Property | I | A reference to the property |

### NullPropertyValue

**Description**
Logically deletes the specified property.² This method allows the user to bypass the property lookup inherent in UMEObjectI::NullProperty, if a reference to the property is available.

**Signature**
Return_t UMEAccessorI:NullPropertyValue(UMEObjectI * Object, UMEPropertyI * Property)

| **Parameters** | | |
|---|---|---|
| Name | Type | Description |
| <return> | R | The error code for the call |
| Object | I | A reference to the object owning the property |
| Property | I | A reference to the property |

### SetActionCode

**Description**
Indicates what action the accessor is to take on a SetProperty call. The code can be a bitwise ORing of the action constants noted above.

**Signature**
void UMEAccessorI:SetActionCode(unsigned long Code)

| **Parameters** | | |
|---|---|---|
| Name | Type | Description |
| Flags | I | The flags desired on the property. |

### SetFlags

**Description**
Sets the flags desired on the property. This is used in conjunction with the kOverwriteFlags action code to set new flags on a property. Note that calling this method will have no effect on the property unless the kOverwriteFlags action code is set.

**Signature**
void UMEAccessorI:SetFlags(ItemFlags_t Flags)

| **Parameters** | | |
|---|---|---|
| Name | Type | Description |
| Flags | I | The flags desired on the property. |

### SetPropertyValue

**Description**
Sets the value of the specified property. This method allows the user to bypass the property lookup inherent in UMEObjectI::SetProperty, if a reference to the property is available.

**Signature**
Return_t UMEAccessorI:SetPropertyValue(UMEObjectI * Object, UMEPropertyl * Property)

| **Parameters** | | |
|---|---|---|
| Name | Type | Description |
| <return> | R | The error code for the call |
| Object | I | A reference to the object owning the property |
| Property | I | A reference to the property |

### SetRaw

**Description**
Controls whether the accessor operates in raw or cooked mode. In raw mode, semantics are not fired. In cooked mode, semantics are fired.
This method will do nothing if the accessor is active...i.e. in the midst of modifying a property.
Be *very* careful about using raw accessors. When you do so, you are bypassing the mechanisms designed to maintain model integrity. The UMA Cookbook contains some examples of when you might want to do this. If in doubt, don't do it.

**Signature**
bool UMEAccessorI::SetRaw(bool On)

**Parameters**

| Name | Type | Description |
|---|---|---|
| <return> | R | The old state of the accessor: True equals raw, False equals cooked |
| On | I | The desired state of the accessor: True equals raw, False equals cooked |

### 1.1.16 UMEScalarAccessorTI

**Extends: UMEAccessorI**
   Templated interface for scalar accessors.

### SetValue

**Description**
Sets a value into the accessor.

**Signature**
void UMEScalarAccessorTI<T>::SetValue(const T & Value)

**Parameters**

| Name | Type | Description |
|---|---|---|
| Value | I | The value to set in the accessor |

### Value

**Description**
Retrieves the value in the accessor.

**Signature**
T UMEScalarAccessorTI<T>::Value(void) const

**Parameters**

| Name | Type | Description |
|---|---|---|
| <return> | R | The value in the accessor |

### 1.1.17 UMEVectorAccessorTI

**Extends: UMEAccessorI**
   Templated interface for vector accessors. Vector accessors are any that contain a set of scalar values (e.g.: arrays, lists, hash sets). They do not support sets of non-scalar values (e.g.: hash dictionary).
   Vector accessors support an internal iterator that provides access to their values.

### Clear

**Description**
   Remove all values from the accessor.
Signature
   void UMEVectorAccessorTI<T>::Clear(void)

### Contains

**Description**
Determines if the specified value is in the accessor.

Signature
bool UMEVectorAccessorTI<T>::Contains(const T & Value) const

| **Parameters** | | |
|---|---|---|
| Name | Type | Description |
| <return> | R | True if the accessor contains the value |

### Count

**Description**
   Determines the number of items in the accessor.
**Signature**
   unsigned long UMEVectorAccessorTI<T>::Count(void) const

| **Parameters** | | |
|---|---|---|
| Name | Type | Description |
| <return> | R | The number of items in the accessor |

### GetNextValue

**Description**
Advances the internal iterator and retrieves the next value.

**Signature**
bool UMEVectorAccessorTI<T>::GetNextValue(T & Value)

| **Parameters** | | |
|---|---|---|
| Name | Type | Description |
| <return> | R | True if there is another value, False if no more |
| Value | O | The value |

### Resetlterator

**Description**
   Resets the internal iterator.
**Signature**
   void UMEVectorAccessorTI<T>::ResetIterator(void)

### SetValue

**Description**
Add a value or values to the accessor.

**Signature**
Variant A: void UMEVectorAccessorTI<T>::SetValue(const T & Value)
Variant B: void UMEVectorAccessorTI<T>::SetValue(const LWTOrderedVectorT<T> & Values)

| **Parameters** | | |
|---|---|---|
| Name | Type | Description |
| Value | I | A single value to append to the accessor |
| Values | I | A set of values to append to the accessor |

### 1.1.18 UMEObjectSemanticl

Defines the interface for all object semantics. Object semantic events are identified by a series of bit flags.

UMEObjectSemanticI defines the following event ids:

| Constant | Can Abort | Description |
|---|---|---|
| kPostCreation | N | Fired immediately after the object is created by the user |
| kPreDestruction | Y | Fired immediately before the object is to be destroyed |
| kPreTypeCodeChange | Y | Fired immediately before subtype migration |
| kPostTypeCodeChange | Y | Fired immediately after subtype migration |
| kManageCache | N | Fired immediately after the object is created by a load from persistent store or by the transaction manager.. |

### Fire

**Description**
Invokes the semantic.

**Signature**
Return_t UMEObjectSemanticI::Fire(SemanticEvent_t Event, UMEObjectI & Object, UMEObjectSemanticContext * Reserved = NULL)

| **Parameters** | | |
|---|---|---|
| Name | Type | Description |
| <return> | R | The error code for the call |
| Event | I | The semantic event that is being triggered |
| Object | I | The object being affected |
| Reserved | | Reserved for future use |

### Interests

### Description

Retrieves the semantic events that the semantic handles. This is used for performance enhancement. This method is called only once, upon registration of the semantic with the metamodel. The events handled by the semantic cannot be altered at runtime.

### Signature

SemanticEvent_t UMEObjectSemantic::Interests(void) const

| **Parameters** | | |
|---|---|---|
| Name | Type | Description |
| <return> | R | The flags indicating the semantic events handled |

### 1.1.19 UMEPropertySemanticl

Defines the interface for all property semantics.

Property semantic events are identified by a series of bit flags. UMEPropertySemanticI defines the following event ids:

| **Constant** | **Can Abort** | **Description** |
|---|---|---|
| kPreEdit | Y | Fired just before a property's value is changed |
| kPostEdit | Y | Fired just after a property's value is changed |
| kPreDestruction | Y | Fired just before a property is destroyed |
| kPreFetch | N | For properties flagged as prefetch type in the metamodel and that have the kPreFetch instance flag turned on, fired just before the value of the property is read. |
| kPostClip | N | Property was just clipped |
| kPreOwnerDestruction | N | The owning object is about to be destroyed |

### Fire

**Description**
Invokes the semantic.

**Signature**
Return_t UMEPropertySemanticI::Fire(SemanticEvent_t Event, UMEObjectI & Object, UMEPropertyI & Property, UMEPropertySemanticContext * Reserved = NULL)

| **Parameters** | | |
|---|---|---|
| Name | Type | Description |
| <return> | R | The error code for the call |
| Event | I | The semantic event that is being triggered |
| Object | I | The object being affected |
| Property | I | The property being affected |
| Reserved | | Reserved for future use |

### Interests

**Description**
Retrieves the semantic events that the semantic handles. This is used for performance enhancement. This method is called only once, upon registration of the semantic with the metamodel. The events handled by the semantic cannot be altered at runtime.
**Signature**
SemanticEvent_t UMEPropertySemantic::Interests(void) const

| **Parameters** | | |
|---|---|---|
| Name | Type | Description |
| <return> | R | The flags indicating the semantic events handled |

### 1.1.20 UMETxCommandI

Transaction commands are used to specify a set of actions that are to take place at the end of the current transaction.

As an example, the semantic mechanism does not allow a property that is the subject of a semantic firing to be destroyed in the midst of the event. To do so would remove the property from memory before all semantics had an opportunity to complete. Attempts to destroy a property in this circumstance result in a destruction command being queued with the transaction manager. After all semantics have fired, the property will be destroyed.

### Do

**Description**
Executes the command.

**Signature**
bool UMETxCommandI::Do(void)

| **Parameters** | | |
|---|---|---|
| Name | Type | Description |
| <return> | R | True if the command executed successfully. |

### 1.1.21 UMETxMgrI

Interface used for managing transactions.

### AdoptCommand

Description
Puts a command into the transaction manager's queue for execution at the end of the transaction. The command must be allocated on the heap and responsibility for its destruction passes to the transaction manager.
Signature
Result_t UMETxMgrI:AdoptCommand(UMETxCommandl * command)

| **Parameters** | | |
|---|---|---|
| Name | Type | Description |
| <return> | R | The error code for the call |
| Command | I | Command object to be enqueued |

### Begin

**Description**
Starts a transaction.

**Signature**
Variant A: Result_t UMETxMgrI::Begin (UMETxIdI * & Id, boolean Notify = false, UMETxDataI * Data, bool AutoDestruct = false)
Variant B: Resutt_t UMETxMgrI::Begin(UMETxIdI * & Id, UMESubscriberI * Subscriber)

| **Parameters** | | |
|---|---|---|
| Name | Type | Description |
| <return> | R | The error code for the call |
| Id | O | Receives the transaction Id assigned to the new transaction |
| Notify | I | Indicates if subscribers to the transaction manager should be notified when this transaction closes. |

| | | |
|---|---|---|
| Data | I | Programmer-defined data to store with the transaction. |
| AutoDestruct | I | Indicates if this transaction will be undoable after it is closed |
| Subscriber | I | A non-null value causes a one-time subscription to the transaction manager. |

### CurrentTxld

**Description**
Retrieves the id of the current transaction.

**Signature**
const UMETxIdI * UMETxMgrI::CurrentTxId (void)

| **Parameters** | | |
|---|---|---|
| Name | Type | Description |
| <return> | R | Id of the current transaction |

### End

**Description**
Ends a transaction and causes a commit of the events within it.

**Signature**
Result_t UMETxMgrI::End(UMETxIdI * Id)

| **Parameters** | | |
|---|---|---|
| Name | Type | Description |
| <return> | R | The error code for the call |
| Id | I | Identifies the transaction to be ended. |

### Fail

**Description**
Fails a transaction and causes a rollback of the events within it.

**Signature**
Result_t UMETxMgrI::Fail( UMETxIdI * Id )

| **Parameters** | | |
|---|---|---|
| Name | Type | Description |
| <return> | R | The error code for the call |
| Id | I | Identifies the transaction to be failed. |

### GetTxData

**Description**
Retrieves the transaction data attached to the specified transaction.

**Signature**
Return_t UMETxMgrI::GetTxData(UMETxIdI * Id, UMETxData * & Data)

| **Parameters** | | |
|---|---|---|
| Name | Type | Description |
| <return> | R | The error code for the call |
| Id | I | The transaction id |
| Data | O | Receives the transaction data |

### GetOuferTxList

**Description**
Retrieves a list of the outermost (user) transactions.

**Signature**
Return_UMETxMgrI:GetOuterTxList( LWTOrderedVectorT<UMETxIdI *> & Transactions) const

| **Parameters** | | |
|---|---|---|
| Name | Type | Description |
| <return> | R | The error code for the call |
| Transactions | O | The list of outer transactions |

### GetTxld

**Description**
Retrieves the transaction id for a named transaction.

**Signature**
Return_t UMETxMgrI::GetTxId(const LWTString & Name, UMETxIdI * & Id) const

| **Parameters** | | |
|---|---|---|
| Name | Type | Description |
| <return> | R | The error code for the call |
| Name | I | The name of the transaction |
| Id | O | The id of the transaction |

### GetTxName

**Description**
Retrieves the name of a transaction.

**Signature**
Return_t UMETxMgrI::GetTxName(UMETxIdI * Id, LWTString & Name) const

**Parameters**

| Name | Type | Description call |
|---|---|---|
| <return> | R | The error code for the |
| Id | I | The transaction id |
| Name | O | The name of the transaction |

### IsLogging

**Description**
Determines if the transaction manager is currently logging.

**Signature**
bool UMETxMgrI::IsLogging(void) const

| **Parameters** | | |
|---|---|---|
| Name | Type | Description |
| <return> | R | True if logging |

### IsOk

**Description**
Determines if the transaction manager is :n a good state.

**Signature**
bool UMETxMgrI::IsOk(void) const

| **Parameters** | | |
|---|---|---|
| Name | Type | Description |
| <return> | R | True if Ok |

### IsTxOpen

**Description**
Determines if a transaction is currently open.

**Signature**
bool UMETxMgrI::IsTxOpen(void) const

| **Parameters** | | |
|---|---|---|
| Name | Type | Description |
| <return> | R | True if a transaction is open. |

### NextTxld

**Description**
Retrieves the id of the next transaction.

**Signature**
UMETxIdI * UMETxMgrI::NextTxId(void)

| **Parameters** | | |
|---|---|---|
| Name | Type | Description |
| <return> | R | Id of the next transaction |

### Pause

**Description**
Causes the transaction manager to suspend logging.

**Signature**
Result_t UMETxMgrI::Pause(void)

| **Parameters** | | |
|---|---|---|
| Name | Type | Description |
| <return> | R | The error code of the call |

### PreviousTxld

**Description**
Retrieves the id of the previous transaction.

**Signature**
UMETxIdI * UMETxMgrI::PreviousTxId(void)

| **Parameters** | | |
|---|---|---|
| Name | Type | Description |
| <return> | R | Id of the previous transaction |

### Resume

**Description**
Causes the transaction manager to resume logging.

**Signature**
Result_t UMETxMgrI::Resume(void)

| **Parameters** | | |
|---|---|---|
| Name | Type | Description |
| <return> | R | The error code of the call |

### SetTxName

**Description**
Specifies a user-readable name for a transaction.

**Signature**
Return_t UMETxMgrI::SetTxName(UMETxIdI * Id, const LWTString & Name)

| **Parameters** | | |
|---|---|---|
| Name | Type | Description |
| <return> | R | The error code for the call |
| Id | I | The id of the transaction |
| Name | I | The name to set on the transaction |

### Redo

**Description**
Causes the transaction manager to redo to the specified transaction.

**Signature**
Result_t UMETxMgrI::Redo(UMETxIdI * Id)

| **Parameters** | | |
|---|---|---|
| Name | Type | Description |
| <return> | R | The error code of the call |
| Id | I | Identifies the transaction to be redone |

### Reset

**Description**
Causes the transaction manager flush all transactions and return to its initial state.

**Signature**
Result_t UMETxMgrI::Reset(void)

| **Parameters** | | |
|---|---|---|
| Name | Type | Description |
| <return> | R | The error code of the call |

### Undo

**Description**
Causes the transaction manager to undo to the specified transaction.

**Signature**
Result_t UMETxMgrI::Undo(UMETxIdI * Id)

| **Parameters** | | |
|---|---|---|
| Name | Type | Description |
| <return> | R | The error code of the call |
| Id | I | Identifies the transaction to be undone |

### 1.1.22 UMEVisitorl

### Visit

**Description**
Invokes the visitor to operate on the specified item.

**Signature**
Variant A: Return_t UMEVisitorI::Visit(UMEObjectI * Object)
Variant B: Return_t UMEVisitorI::Visit(UMEPropertyI * Property)

| **Parameters** | | |
|---|---|---|
| Name | Type | Description |
| <return> | R | The error code for the call |
| Object | I | The object to visit |
| Property | I | The property to visit |

### 1.1.23 UMEPropertyIteratorI

Used to iterate across the properties owned by an object.

As with all UMA iterators, it uses a "move then read" metaphor-you must increment before reading the next value.

Filter and sorting are supported for this iterator.

### Count

**Description**
Returns the number of properties that will be iterated. Note, if a filter is used, the iterator will have to traverse the property list to determine the actual count.
**Signature**
long UMEUMEPropertyIteratorI::Count(void) const

| **Parameters** | | |
|---|---|---|
| Name | Type | Description |
| <recturn> | R | The number of items that will be iterated |

### Reset

**Description**
Re-initializes the iterator.

**Signature**
void UMEUMEPropertyIteratorI::Reset(bool Recalculate)

| **Parameters** | | |
|---|---|---|
| Name | Type | Description |
| Recalculate | I | If True, the sorting and filtering (if any) will be re-performed. If False, the old filtering and sorting remain in effect. |

### SetFilter

**Description**
Sets the filter to be used on the iterator. Changing the filter once iteration has begun will cause a reset to be performed on the iterator.
**Signature**
void UMEUMEPropertyIteratorI:SetFilter(UMEFiIterTI<UMEPropertyI *> * Filter)

| **Parameters** | | |
|---|---|---|
| Name | Type | Description |
| Filter | I | The filter to be used while iterating |

### SetSorfer

**Description**
Sets the sorter to be used on the iterator. Changing the sorter once iteration has begun will cause a reset to be performed on the iterator.
**Signature**
void UMEUMEPropertyIteratorI::SetSorter(UMESorterTI<UMEPropertyI *> * Sorter)

| **Parameters** | | |
|---|---|---|
| Name | Type | Description |
| Sorter | I | The Sorter to be used while iterating |

### Value

**Description**
Retrieves the value at the current iterator position. If the iterator is before the beginning of the container, the results are undefined.
**Signature**
UMEPropertyI * UMEUMEPropertyIteratorI::Value (void) const

| **Parameters** | | |
|---|---|---|
| Name | Type | Description |
| <return> | R | The current value of the iterator |

### operator++

**Description**
Increments the iterator.

**Signature**
bool UMEUMEPropertyIteratorI::operator++(void)

| **Parameters** | | |
|---|---|---|
| Name | Type | Description |
| <return> | R | True if the iteration succeeded, False if there are no more |
| | | entries. |

### 1.1.24 UMEFilerTI

This is the interface for a templated filter used by the various iterators in the UMA modules.

### Test

**Description**
Tests the item to see if it should be included in the iteration.

**Signature**
bool UMEFilterTI<T>::Test(T & Item)

| **Parameters** | | |
|---|---|---|
| Name | Type | Description |
| <return> | R | True if the item should be included, False if not |
| Item | I | The item to be tested |

### 1.1.25 UMESorterTI

This is the interface for a templated sorter used by the various iterators in the UMA modules.

### Sort

**Description**
Sorts the buffer of items into the desired order.

**Signature**
bool UMESorterTI<T>::Sort(T * Buffer, long Count)

**Parameters**

| Name | Type | Description |
|---|---|---|
| Buffer | I | A buffer of items to be sorted |
| Count | I | The number of items in the buffer |

### 1.1.26 UMESignatureGeneratorI

Signature generators are conceptually similar to visitors, they encapsulate an algorithm for operating on an object. In their case, they extract a signature for the object. A signature is a string that uniquely identifies the object in the model. Multiple signature generators can be registered with the metamodel to provide different algorithms for matching objects.

Signature generators must advertise the level of the values they generate. The level of a signature indicates the scope of its uniqueness. The levels are indicated by the constants in the following table. For each level, an example is provided indicating a signature for a database table.

| **Constant** | **Description** |
|---|---|
| kUniversal | The signature is unique across time and space. An example would be a string representation of a GUID. |
| | CBSBDC81-93C1-11cf-8F20-00805F2CD064 |
| kInstallation | The signature is unique across time, but its uniqueness is limited to a particular repository of models. An example would be a string representation of a ModelMart 3.0 id. |
| | 12323123 |
| kSession | The signature is unique across models in memory, but is not unique once the current session ends. An example would be a string representation of an UMA local id. |
| | 298 |
| kPersistenceUnit | The signature is unique across a persistence unit in memory. An example would be a string concatenating the typecode, project name, model name, owner name, and table name. |
| | 43.Project1.OracleModel.tdeffler.Customer |
| kWorkspace | The signature is unique across a workspace in memory. An example would be a string concatenating typecode, owner name, and table name. |

43tdefflerCustomer

### GetSignafure

**Description**
Constructs a signature for the object. If the object type is not supported, an empty string will be returned.
**Signature**
void UMESignatureGeneratorI:GetSignature(UMEObjectI * Object, LWTString & Signature) const

| **Parameters** | | |
|---|---|---|
| Name | Type | Description |
| Object | I | The object for which a signature is generated |
| Signature | O | The signature |

### Id

**Description**
Retrieves the id.

**Signature**
SignatureGeneratorId_t UMESignatureGeneratorI::Id(void) const

| **Parameters** | | |
|---|---|---|
| Name | Type | Description |
| <retutn> | R | The id |

### SignatureLevel

**Description**
Returns a constant indicating the type of signature generated.

**Signature**
long UMESignatureGeneratorI::SignatureLevel(void) const

**Parameters**

| Name | Type | Description |
|---|---|---|
| m> | R | The signature level |

## Claims

1. A modelling tool apparatus **characterised by**:
a meta model (210) including a semantic registry (220) and a meta data manager (240), the meta data manager (240) storing information describing a characteristic of an object or property and the semantic registry (220) storing a rule to be enforced when modelling the object or property;
an object/property factory registry (260), coupled to the meta model (210), operable to create an instance of the object or property;
an object/property model (290) operable to store an instance of the object or property;
an object/property interface (280), coupled to the object/property factory registry (260) and the object/property model (290), operable to provide the instance of the object or property from the object/property factory registry (260) to the object/property model (290); and
a transaction manager (285) coupled to the object/property interface (280) for undoing an action that violates the rule and places the object/property model (290) in an invalid state.

2. The apparatus according to claim 1, wherein the semantic registry (220) of the meta model (210) includes at least a predefined set of semantics.

3. The apparatus according to claim 1, wherein the semantic registry (220) of the meta model (210) includes at least one set of semantics provided by a developer.

4. The apparatus according to claim 1, wherein the object/property factory registry (260) of the meta model (210) includes at least one object factory for creating an instance of an object and one property factory for creating an instance of a property.

5. The apparatus according to claim 1, wherein the object/property model (290) includes a predefined set of at least one of a plurality of objects and a plurality of properties.

6. The apparatus according to claim 1, wherein the object/property model (290) includes instances of objects and properties based on an external definition of the meta model.

7. The apparatus according to claim 1, further comprising a log file (295) coupled to the transaction manager (285).

8. The apparatus according to claim 1, wherein the object/property interface (280) limits access to the object/property model (290).

9. A method **characterised by**:
constructing (610) an object/property model (290) by defining a first set of classes, the object/property model operable to store an instance of an object or property;
constructing (620) a meta model (210) by defining a second set of classes, the meta model operable to store information describing an object or property and further operable to store a semantic, wherein a semantic includes a rule to be enforced when modelling an object or property;
associating (630) a type code with the first and second set of classes to couple an instance of an object or property stored in the object/property model (290) with an object or property specified in the meta model (210) ;
providing (640) a predefined set of semantics to the meta model (210);
identifying (650) a plurality of discrete events, wherein at least one semantic of the set of semantics is invoked at each occurrence of the plurality of discrete events;
providing (660) an object/property interface (280) for limiting access to the object/property model (290); and
providing a transaction manager (285) for undoing action that violates the rule and places the object/property model (290) in an invalid state.

10. The method according to claim 9, wherein the object/property model (290) includes a predefined set of at least one of a plurality of objects and a plurality of properties.

11. The method according to claim 9, wherein the object/property model (290) includes instances of objects and properties based on an external definition of the meta model (210) provided by the developer.

12. The method according to claim 9, wherein the meta model (210) includes at least one set of semantics provided by the developer.

13. A computer-readable medium comprising instructions which, when executed by a computer, cause the computer to perform a method in accordance with any one of claims 9 to 12.

## Patentansprüche

1. Modellierwerkzeug-Apparatur, **gekennzeichnet durch**:
ein Metamodell (210) mit einem semantischen Register (220) und einem Metadaten-Manager (240), wobei der Metadaten-Manager (240) Informationen speichert, die eine Charakteristik eines Objekts oder einer Eigenschaft beschreiben, und wobei das semantische Register (220) eine Regel speichert, die beim Modellieren des Objekts oder der Eigenschaft durchzusetzen ist;
ein Objekt/ Eigenschaft-Werksregister (260), gekoppelt mit dem Metamodell (210), zum Erzeugen einer Instanz des Objekts oder der Eigenschaft;
ein Objekt/ Eigenschaft-Modell (290) zum Speichern einer Instanz des Objekts oder der Eigenschaft;
eine Objekt/ Eigenschaft-Schnittstelle (280), gekoppelt mit dem Objekt/Eigenschaft-Werksregister (260) und dem Objekt/Eigenschaft-Modell (290), um dem Objekt/Eigenschaft-Modell (290) die Instanz des Objekts oder der Eigenschaft aus dem Objekt/Eigenschaft-Werksregister (260) bereitzustellen; und
einen Transaktionsmanager (285), gekoppelt mit der Objekt/Eigenschaft-Schnittstelle (280), zum Rückgängigmachen einer Aktion, die die Regel verletzt und das Objekt/Eigenschaft-Modell (290) in einen ungültigen Zustand versetzt.

2. Apparatur nach Anspruch 1, wobei das Semantikregister (220) des Metamodells (210) wenigstens einen vordefinierten Semantiksatz beinhaltet.

3. Apparatur nach Anspruch 1, wobei das Semantikregister (220) des Metamodells (210) wenigstens einen von einem Entwickler bereitgestellten Semantiksatz beinhaltet.

4. Apparatur nach Anspruch 1, wobei das Objekt/Eigenschaft-Werksregister (260) des Metamodells (210) wenigstens ein Objektwerk zum Erzeugen einer Instanz eines Objekts und ein Eigenschaftswerk zum Erzeugen einer Instanz einer Eigenschaft beinhaltet.

5. Apparatur nach Anspruch 1, wobei das Objekt/Eigenschaft-Modell (290) einen vordefinierten Satz von wenigstens einer aus einer Mehrzahl von Objekten und einer Mehrzahl von Eigenschaften beinhaltet.

6. Apparatur nach Anspruch 1, wobei das Objekt/Eigenschaft-Modell (290) Instanzen von Objekten und Eigenschaften auf der Basis einer externen Definition des Metamodells beinhaltet.

7. Apparatur nach Anspruch 1, die ferner eine Log-Datei (295) umfasst, die mit dem Transaktionsmanager (285) gekoppelt ist.

8. Apparatur nach Anspruch 1, wobei die Objekt/Eigenschaft-Schnittstelle (280) den Zugang zu dem Objekt/Eigenschaft-Modell (290) begrenzt.

9. Verfahren, **gekennzeichnet durch**:
Konstruieren (610) eines Objekt/Eigenschaft-Modells (290) **durch** Definieren eines ersten Satzes von Klassen, wobei das Objekt/Eigenschaft-Modell zum Speichern einer Instanz eines Objekts oder einer Eigenschaft dient;
Konstruieren (620) eines Metamodells (210) **durch** Definieren eines zweiten Satzes von Klassen, wobei das Metamodell zum Speichern von Informationen, die ein Objekt oder eine Eigenschaft beschreiben, und ferner zum Speichern einer Semantik dient, wobei eine Semantik eine Regel beinhaltet, die beim Modellieren eines Objekts oder einer Eigenschaft durchgesetzt wird;
Assoziieren (630) eines Typencodes mit dem ersten und dem zweiten Satz von Klassen zum Koppeln einer Instanz eines/einer in dem Objekt/Eigenschaft-Modell (290) gespeicherten Objekts oder Eigenschaft mit einem/einer in dem Metamodell (210) vorgegebenen Objekt oder Eigenschaft;
Bereitstellen (640) eines vordefinierten Semantiksatzes dem Metamodell (210);
Identifizieren (650) mehrerer diskreter Events, wobei wenigstens eine Semantik des Semantiksatzes bei jedem Auftreten der mehreren diskreten Events aufgerufen wird;
Bereitstellen (660) einer Objekt/Eigenschaft-Schnittstelle (280) zum Begrenzen des Zugangs zu dem Objekt/Eigenschaft-Modell (290); und
Bereitstellen eines Transaktionsmanagers (285) zum Rückgängigmachen einer Aktion, die die Regel verletzt und das Objekt/Eigenschaft-Modell (290) in einen ungültigen Zustand versetzt.

10. Verfahren nach Anspruch 9, wobei das Objekt/Eigenschaft-Modell (290) einen vordefinierten Satz von wenigstens einer aus einer Mehrzahl von Objekten und einer Mehrzahl von Eigenschaften beinhaltet.

11. Verfahren nach Anspruch 9, wobei das Objekt/Eigenschaft-Modell (290) Instanzen von Objekten und Eigenschaften auf der Basis einer externen Definition des von dem Entwickler bereitgestellten Medamodells (210) beinhaltet.

12. Verfahren nach Anspruch 9, wobei das Metamodell (210) wenigstens einen vom Entwickler bereitgestellten Semantiksatz beinhaltet.

13. Computerlesbares Medium, das Befehle umfasst, die bei Abarbeitung durch einen Computer bewirken, dass der Computer ein Verfahren nach einem der Ansprüche 9 bis 12 ausführt.

## Revendications

1. Un appareil d'outil de modélisation **caractérisé par** :
un méta-modèle (210) comprenant un registre sémantique (220) et un gestionnaire de métadonnées (240), le gestionnaire de métadonnées (240) conservant en mémoire des informations décrivant une caractéristique d'un objet ou d'une propriété et le registre sémantique (220) conservant en mémoire une règle à appliquer lors de la modélisation de l'objet ou de la propriété,
un registre de fabrique d'objets/propriétés (260), couplé au méta-modèle (210), conçu de façon à créer une instance de l'objet ou de la propriété,
un modèle d'objet/propriété (290) conçu de façon à conserver en mémoire une instance de l'objet ou de la propriété,
une interface d'objet/propriété (280), couplée au registre de fabrique d'objets/propriétés (260) et au modèle d'objet/propriété (290), conçue de façon à fournir l'instance de l'objet ou de la propriété à partir du registre de fabrique d'objets/propriétés (260) au modèle d'objet/propriété (290), et
un gestionnaire de transactions (285) couplé à l'interface d'objet/propriété (280) destiné à annuler une action qui viole la règle et à placer le modèle d'objet/propriété (290) dans un état non valide.

2. L'appareil selon la Revendication 1, où le registre sémantique (220) du méta-modèle (210) contient au moins un ensemble prédéfini d'éléments sémantiques.

3. L'appareil selon la Revendication 1, où le registre sémantique (220) du méta-modèle (210) contient au moins un ensemble d'éléments sémantiques fourni par un développeur.

4. L'appareil selon la Revendication 1, où le registre de fabrique d'objets/propriétés (260) du méta-modèle (210) contient au moins une fabrique d'objets destinée à la création d'une instance d'un objet et une fabrique de propriétés destinée à la création d'une instance d'une propriété.

5. L'appareil selon la Revendication 1, où le modèle d'objet/propriété (290) comprend un ensemble prédéfini d'au moins une pluralité parmi une pluralité d'objets et une pluralité de propriétés.

6. L'appareil selon la Revendication 1, où le modèle d'objet/propriété (290) comprend des instances d'objets et de propriétés en fonction d'une définition externe du méta-modèle.

7. L'appareil selon la Revendication 1, comprenant en outre un fichier journal (295) couplé au gestionnaire de transactions (285).

8. L'appareil selon la Revendication 1, où l'interface d'objet/propriété (280) limite l'accès au modèle d'objet/propriété (290).

9. Un procédé **caractérisé par** :
la construction (610) d'un modèle d'objet/propriété (290) par la définition d'un premier ensemble de classes, le modèle d'objet/propriété étant conçu de façon à conserver en mémoire une instance d'un objet ou d'une propriété,
la construction (620) d'un méta-modèle (210) par la définition d'un deuxième ensemble de classes, le méta-modèle étant conçu de façon à conserver en mémoire des informations décrivant un objet ou une propriété et étant conçu en outre de façon à conserver en mémoire un élément sémantique, où un élément sémantique comprend une règle à appliquer lors de la modélisation d'un objet ou d'une propriété,
l'association (630) d'un code de type aux premier et deuxième ensembles de classes de façon à coupler une instance d'un objet ou d'une propriété conservée en mémoire dans le modèle d'objet/propriété (290) avec un objet ou une propriété spécifié dans le méta-modèle (210),
la fourniture (640) d'un ensemble prédéfini d'éléments sémantiques au méta-modèle (210),
l'identification (650) d'une pluralité d'événements discrets, où au moins un élément sémantique de l'ensemble d'éléments sémantiques est invoqué à chaque occurrence de la pluralité d'événements discrets,
la fourniture (660) d'une interface d'objet/propriété (280) destinée à limiter l'accès au modèle d'objet/propriété (290), et
la fourniture d'un gestionnaire de transactions (285) destiné à annuler une action qui viole le règle et à placer le modèle d'objet/propriété (290) dans un état non valide.

10. Le procédé selon la Revendication 9, où le modèle d'objet/propriété (290) comprend un ensemble prédéfini d'au moins une pluralité parmi une pluralité d'objets et une pluralité de propriétés.

11. Le procédé selon la Revendication 9, où le modèle d'objet/propriété (290) comprend des instances d'objets et de propriétés en fonction d'une définition externe du méta-modèle (210) fourni par le développeur.

12. Le procédé selon la Revendication 9, où le méta-modèle (210) comprend au moins un ensemble d'éléments sémantiques fourni par le développeur.

13. Un support lisible par ordinateur contenant des instructions qui, lorsqu'elles sont exécutées par un ordinateur, amènent l'ordinateur à exécuter un procédé selon l'une quelconque des Revendications 9 à 12.
